Europäisches Patentamt

(19) European Patent Office

Office européen des brevets

(11) Veröffentlichungsnummer: **0 157 237**
A2

## (12) EUROPÄISCHE PATENTANMELDUNG

(21) Anmeldenummer: 85102809.2

(22) Anmeldetag: 12.03.85

(51) Int. Cl.⁴: **G 01 N 27/12**, G 01 N 33/00

(30) Priorität: 04.04.84 CH 1699/84

(43) Veröffentlichungstag der Anmeldung: 09.10.85
Patentblatt 85/41

(84) Benannte Vertragsstaaten: **AT BE CH DE FR GB IT LI NL SE**

(71) Anmelder: **CERBERUS AG, Alte Landstrasse 411, CH-8708 Männedorf (CH)**

(72) Erfinder: **Forster, Martin, Sonnenbergstrasse 16, CH-8645 Jona (CH)**
Erfinder: **Strässler, Sigfrid, Segelhalde 40, CH-5405 Baden-Dättwil (CH)**

(74) Vertreter: **Tiemann, Ulrich, Dr.-Ing. et al, c/o Cerberus AG Patentabteilung Alte Landstrasse 411, CH-8708 Männedorf (CH)**

(54) **Verfahren und Vorrichtung zum Nachweis von reduzierenden Gasen in einem Gasgemisch.**

(57) Reduzierende Gase können in einem zu untersuchenden Gasgemisch, insbesondere in Luft, mit großer Empfindlichkeit und Genauigkeit mittels eines Gasdetektors (100) nachgewiesen werden. Der Gasdetektor (100) weist in einer Meßkammer (7) einen Gassensor (11) auf, dessen Temperatur in mindestens zweimaligem Zyklus nach einem vorgegebenen Muster kontinuierlich von einem Anfangswert bis zu einem oberen Schwellwert erhöht und anschließend nach dem gleichen oder einem anderen Muster wieder auf den Anfangswert vermindert wird. Gleichzeitig wird das zu untersuchende Gasgemisch in der Meßkammer (7) periodisch gegen ein reines Referenzgas aus einer Referenzkammer (5) ausgetauscht. Dadurch ändert sich die elektrische Leitfähigkeit des Gassensors (11) periodisch, und der zeitliche Verlauf dieser periodisch variierenden elektrischen Leitfähigkeit kann in einer Auswerteschaltung (3) nachgewiesen und/oder zur Bestimmung der Konzentration und/oder der Art der im zu untersuchenden Gasgemisch vorhandenen reduzierenden Gase ausgewertet werden.

0157237

Verfahren und Vorrichtung zum Nachweis von
reduzierenden Gasen in einem Gasgemisch

---

Die Erfindung betrifft ein Verfahren zum Nachweis von reduzierenden Gasen in einem Gasgemisch, insbesondere in Luft, mittels
eines Gasdetektors (100), der einen einen Metalloxid-Halbleiter
aufweisenden Gassensor (11) enthält, dessen elektrische Leitfähigkeit ($\sigma$) direkt von der Konzentration an reduzierenden
Gasen abhängt und dessen Temperatur in mindestens zweimaligem
Zyklus nach einem vorgegebenen Muster kontinuierlich von einem
Anfangswert bis zu einem oberen Schwellwert erhöht und anschliessend nach dem gleichen oder einem anderen Muster wieder
auf den Anfangswert vermindert wird und dessen elektrisches
Ausgangssignal in einer Auswerteschaltung ausgewertet wird,
sowie eine Vorrichtung zur Durchführung des Verfahrens.

Ein derartiges Verfahren ist aus der EP-PA 92068 bekannt. Bei
diesem bekannten Verfahren wird ein auf Gase empfindliches Sensorelement in mindestens zweimaligem Temperaturzyklus nach
einem vorgegebenen, für bestimmte Gase optimierten Muster kontinuierlich von einem Anfangswert auf einen oberen Wert aufgeheizt und anschliessend nach dem gleichen oder einem anderen
Muster wieder auf den Anfangswert abgesenkt. Eine elektronische
Auswerteschaltung vergleicht während der Temperaturzyklen das
vom Sensorelement gelieferte Signal, das von der Zusammensetzung
der Gas- oder Dampfatmospäre abhängt, mit gespeicherten Werten,
die charakteristisch für das Vorhandensein bestimmter Gas- und/
oder Dampfkomponenten sind.

Mit Hilfe dieses Verfahrens ist es möglich, den breitbandigen
Empfindlichkeitsbereich von Metalloxid basierenden Gassensoren voll auszunutzen und gleichzeitig einzelne Gase
selektiv nachzuweisen. Da es bei der Verwendung solcher Metalloxidhalbleiter-Gassensoren in Gaswarnanlagen darauf ankommt, toxische bzw. explosive Gase in Konzentrationsbereichen nachzuweisen, die möglichst weit unterhalb der unteren Explosionsgrenze liegen sollen, besteht weiterhin ein Bedarf an Verfahren zum Nachweis von Spurenmengen explosiver Gase.

In der DE-PS 2 313 413 ist ein Verfahren beschrieben, bei dem der Kohlenmonoxid- und/oder Methan-Gehalt eines Gasgemisches im Untertagebetrieb mit Hilfe einer Messung des elektrischen Widerstands eines Metalloxidhalbleiters, der die zu messende Gaskomponente adsorbiert und bei höheren Temperaturen beschleunigt desorbiert, bestimmt wird, indem vor jeder Messung die Temperatur des Metalloxidhalbleiters von einem unteren auf einen oberen Grenzwert geändert und die Messung bei dem unteren Grenzwert durchgeführt wird. Dabei wird die Aenderung des elektrischen Widerstandes über ein Zeitintervall gemessen und aus dem absoluten Messwert und/oder dem zeitlichen Verlauf des Messignals die Konzentration von Kohlenmonoxid und/oder Methan bestimmt.

Das in der genannten DE-PS beschriebene, auf die Belange des Bergbaues abgestimmte Verfahren weist den Vorteil auf, dass durch das periodische Aufheizen des Metalloxidhalbleiters eine gute Langzeitstabilität erreicht wird. Beim Nachweis von Kohlenmonoxid ist zur Kompensation der Querempfindlichkeit gegen Methan-Komponenten eine zweite, einen ständig geheizten Metalloxidhalbleiter aufweisende Messkammer erforderlich. Die Regeneration des Metalloxidhalbleiters zwischen den einzelnen Messphasen dauert etwa 1 bis 5 Minuten, anschliessend ist die Abkühlung des Metalloxidhalbleiters auf Zimmertemperatur erforderlich, ehe der eigentliche Messvorgang beginnen kann. Das Verfahren ist daher für Alarmanlagen, bei denen es auf eine rasche Erkennung einer gefährlichen
Konzentration an brennbaren Gasen ankommt, nicht geeignet.
Da nur der absolute Messwert, bzw. der zeitliche Verlauf des
Messsignals zur Bestimmung der Gaskonzentration benutzt wird,
ist das Verfahren ausserdem nicht sehr empfindlich.

Aus der DE-OS 2 832 828 ist ein Kohlenmonoxiddetektor bekannt, der zur Verringerung des Einflusses anderer in einer
Gasprobe zugleich vorhandener Gase zwei Kohlenmonoxiddetektoren unterschiedlicher Empfindlichkeit aufweist. Die unterschiedliche Kohlenmonoxidempfindlichkeit wird durch eine unterschiedliche Struktur der in den Kohlenmonoxiddetektoren
enthaltenen Metalloxidhalbleiter oder durch eine unterschiedliche Temperatur der Detektorelemente erreicht. Für andere
Gase ist dieses Prinzip nicht wirksam.

In der japanischen, offengelegten Patentanmeldung Sho
49-11997 ist ein Gas- und Rauchdetektor beschrieben, der zur
Unterdrückung der Empfindlichkeit gegen langsame Aenderungen
der Eigenschaften der Luft, wie z.B. Temperatur und Feuchtigkeit, zwei unterschiedlich der Luft zugängliche Messkammern
mit Metalloxidhalbleitersensoren aufweist. Die Differenz der
Messignale der beiden Sensoren wird für die Auswertung ausgenutzt. Wegen der leichten Diffundierbarkeit, insbesondere
von niedermolekularen Gasen, ist die Differenz der beiden
Messignale bald wieder Null, so dass der Detektor eher für
den Nachweis von Rauch geeignet sein dürfte.

In der DE-AS 10 17 384 ist ein Verfahren zum Nachweis von
brennbaren Gasen beschrieben, bei dem der Nachweis durch katalytische Verbrennung der nachzuweisenden Gase an einem Platinglühfaden, dessen Widerstandsänderung als Messgrösse benutzt wird, erfolgt. Dabei dient der Platinglühfaden abwechselnd als Verbrennungsmasse und als Vergleichsmasse, indem
über den Platinglühfaden abwechselnd das zu untersuchende Gasgemisch und ein Referenzgas mit keinem oder einem geringen Gehalt an brennbaren Bestandteilchen geleitet wird. Die Temperatur des Platinglühfadens schwankt zeitlich zwischen einem Höchstwert (Verbrennungsperiode) und einem Kleinstwert (keine brennbaren Bestandteile enthaltendes Referenzgas). Die Auswertung dieser Temperaturschwankungen ergibt ein Wechselspannungssignal, dessen Frequenz von der Austauschperiode des Gases und dessen Amplitude von dem Gehalt an brennbaren Bestandteilen abhängt. Letztere wird dann zur Bestimmung des Gehalts an brennbaren Gasen herangezogen.

Durch das in der DE-AS beschriebene Verfahren kann zwar ein Nachteil der mit katalytischer Verbrennung arbeitenden Gasdetektoren vermieden werden, nämlich die von physikalischen Veränderungen des Katalysators herrührende Wanderung des Nullpunkts. Andere Nachteile dieser Detektoren, wie beispielsweise ihre Empfindlichkeit gegenüber Vergiftungen des Katalysators durch Störgase oder ihre relative Unempfindlichkeit, konnte durch das in der DE-AS 10 17 384 vorgeschlagene Verfahren nicht behoben werden. Insbesondere
ein Nachteil der nach dem Prinzip der katalytischen Verbrennung arbeitenden Gassensoren konnte nicht behoben werden:
Die Temperatur des Platinglühfadens wird durch die Verbrennungswärme der nachzuweisenden brennbaren Gase bestimmt
und der elektrische Widerstand des Platindrahtes ist von
der Temperatur abhängig. Die Temperatur des Platinflühfadens hängt aber noch von einer Reihe anderer Bedingungen
ab, so dass die erhaltenen Resultate nicht eindeutig interpretierbar sind.

Da die erhaltenen elektrischen Signale von der Temperatur
des Platinglühfadens abhängig sind, sind sie auch von der
durch die Geometrie der Messkammer bedingten Wärmeleitfähigkeit der Mess-, bzw. Brennkammer abhängig. Bereits
geringfügige, zufällige Abweichungen in der Grösse und Dicke
des Platinglühfadens und seiner Lage zum umgebenden Raum und
dessen Wänden, ergeben Unterschiede in der Signalgrösse bis
zum Faktor zehn. In gleicher Weise können Störungen durch
unterschiedliche Strömungsverhältnisse und zufällige Ablagerungen in der Nähe des Platinglühfadens, die eine
Aenderung der Wärmeleitfähigkeit mit sich bringen, nicht
eliminiert werden.

Die Aufgabe der Erfindung besteht darin, die Nachteile der
bekannten Verfahren zum Nachweis von reduzierenden Gasen zu
vermeiden, die Empfindlichkeit dieser Verfahren zum Nachweis
von reduzierenden Gasen weiter zu verbessern und den Stromverbrauch zu verringern.

Eine weitere Aufgabe der Erfindung besteht darin, die bekannten Verfahren zum Nachweis von reduzierenden Gasen so zu verbessern, dass sie durch Veränderung der Umweltbedingungen, wie Druck, Temperatur oder Wasserdampfkonzentration, nicht oder nur wenig beeinflusst werden, oder ein Verfahren zu schaffen, bei dem die Wasserdampfabhängigkeit auf einfache Weise kompensiert werden kann.

Eine weitere Art der Erfindung besteht darin, ein Verfahren zu schaffen, mit dem es möglich ist, zu bestimmen, welche reduzierende Gase das zu untersuchende Gasgemisch enthält.

Dies wird bei einem Verfahren der eingangs erwähnten Art erfindungsgemäss dadurch erreicht, dass das zu untersuchende Gasgemisch wenigstens teilweise periodisch gegen ein Referenzgas mit keinem oder einem geringeren Gehalt an reduzierenden Gasen ausgetauscht wird, wodurch sich die elektrische Leitfähigkeit des Gassensors periodisch verändert und dass der zeitliche Verlauf dieser periodisch variierenden elektrischen Leitfähigkeit in einer Auswerteschaltung zum Nachweis und/oder zur Bestimmung der Konzentration und/oder der Art der im zu untersuchenden Gasgemisch vorhandenen reduzierenden Gase ausgewertet wird.

Gemäss einer bevorzugten Ausführungsform des erfindungsgemässen Verfahrens wird ein Gasdetektor verwendet, der eine gegen die Aussenluft abgeschlossene, einen Luftbewegungsgenerator aufweisende Referenzkammer und eine mit der Referenzkammer über mindestens eine Verbindungsöffnung in Verbindung stehende, eine Einlassöffnung zum Einlass des zu untersuchenden Gasgemisches aufweisende Messkammer aufweist und der das zu untersuchende Gasgemisch periodisch während einer Einsaugphase durch Volumenvergrösserung der Referenzkammer mittels des Luftbewegungsgenerators durch die Einlassöffnung in die Messkammer saugt, in welcher reduzierende Gase durch den Gassensor mindestens teilweise entfernt werden und der ein reduzierende Gase in geringerer Konzentration enthaltendes, bzw. von reduzierenden Gasen befreites Referenzgasgemisch durch die Verbindungsöffnung in die Referenzkammer saugt und der dieses Referenzgasgemisch während einer Ausblasphase durch Volumenverminderung der Referenzkammer mittels des Luftbewegungsgenerators durch die Messkammer hindurch ausbläst.

Da die Temperaturänderungen des Gassensors und auch der Gasaustausch gleichzeitig, aber nicht unbedingt mit gleicher Periodenlänge, nebeneinander ablaufen, zeigt die elektrische Leitfähigkeit des Gassensors einen komplizierten, aber periodischen zeitlichen Verlauf, aus dem die Anwesenheit von reduzierenden Gasen allgemein, die Anwesenheit eines spezifischen Gases im speziellen und auch dessen Konzentration bestimmt werden kann.

Gemäss einer bevorzugten Ausführungsform des erfindungsgemässen Verfahrens wird dabei das zu untersuchende Gasgemisch durch die Messkammer in eine gegen die Aussenatmosphäre abgeschlossene Referenzkammer gesaugt und dann durch die Messkammer wieder ausgeblasen, wobei während des Einsaugens das zu untersuchende Gasgemisch in die Messkammer über oder durch den Gassensor strömt und während des Ausblasens das zu untersuchende Gasgemisch die Messkammer verlässt und durch ein Gasgemisch ersetzt wird, welches das nachzuweisende Gas nicht oder in geringerer Konzentration enthält, wodurch der Gassensor eine elektrische Leitfähigkeit zeigt, die sich entsprechend der höheren Konzentration an reduzierendem Gas während des Einsaugens und entsprechend der niedrigeren Konzentration an reduzierendem Gas während des Ausblasens periodisch verändert. Durch die gleichzeitig ablaufende periodische Temperaturänderung (Temperaturzyklus) des Gassensors wird die elektrische Leitfähigkeit des Gassensors zusätzlich beeinflusst, wodurch gesamthaft der Gassensor eine elektrische Leitfähigkeit mit periodischem Verlauf zeigt, der durch die Anwesenheit von reduzierenden Gasen im zu untersuchenden Gasgemisch charakteristisch verändert wird.

In einer Auswerteeinheit wird die zeitlich variierende elektrische Leitfähigkeit des Gassensors in ein Spannungssignal umgesetzt und gemessen, wobei diese Messung entweder kontinuierlich oder auch nur in gewissen vorbestimmten Zeitabständen erfolgt. Die so erhaltenen Messresultate werden mit Referenzwerten verglichen und dadurch kann entschieden werden, welche Arten und welche Konzentrationen der detektierten reduzierenden Gase im zu untersuchenden Gasgemisch vorhanden sind.

Gemäss einer bevorzugten Ausführungsform des erfindungsgemässen Verfahrens wird die Zeitdauer der Gasaustauschperiode so gewählt, dass sie wesentlich kürzer ist, mindestens zweimal, besser aber fünf- bis zehnmal kürzer als der Zyklus der Temperaturänderungen. Der Temperaturzyklus des Gassensors und die Austauschperiode des zu untersuchenden Gasgemisches werden also in der Weise aufeinander abgestimmt, dass während eines Temperaturzyklus mehrere Gasaustauschperioden stattfinden. In diesem Falle zeigt der Gassensor des erfindungsgemäss verwendeten Gasdetektors eine elektrische Leitfähigkeit, die sich zusammensetzt aus einem langsam variierenden, sich mit der Frequenz des Temperaturzyklus verändernden Anteil und aus einem mit der Frequenz des Gasaustausches modulierten, sein Vorzeichen wechselnden Anteil. Diese Anteile der elektrischen Leitfähigkeit werden in einer Auswerteschaltung in ein langsam variierendes Gleichspannungssignals und ein Wechselspannungssignal getrennt und mindestens das Wechselspannungssignal wird dann zum Nachweis von reduzierenden Gasen verwendet.

Gemäss einer besonders bevorzugten Ausführungsform des erfindungsgemässen Verfahrens wird die Zeitdauer der Gasaustauschperiode so gewählt, dass sie mit der doppelten zeitlichen Länge des Temperaturzyklus übereinstimmt, wobei es besonders bevorzugt ist, dass Temperaturzyklus des Gassensors und Austauschperiode des zu untersuchenden Gasgemisches so aufeinander abgestimmt sind, dass die Temperatur des Halbleiter-Gassensors während eines Hochtemperaturzeitabschnitts im ersten Teil der Einsaugphase auf einer Temperatur, mindestens 50°C über der Temperatur des Gassensors während des anschliessenden Niedertemperaturabschnitts liegt, vorzugsweise etwa 350°C, gehalten wird und während eines Niedertemperaturabschnitts im zweiten Teil der Einsaugphase auf einem niedrigen Wert von 30°C bis 300°C, vorzugsweise etwa 50°C, gehalten wird und dass während annähernd der ersten Hälfte der Ausblasperiode die Temperatur des Gassensors auf dem gleichen hohen Wert gehalten wird und während annähernd der zweiten Hälfte der Ausblasperiode auf dem gleichen niedrigen Wert gehalten wird wie beim Einsaugen. Wird im erfindungsgemässen Verfahren ein nach dem Prinzip der katalytischen Verbrennung arbeitender Pellistor verwendet, so liegt die Temperatur dieses Pellistors während dem Niedertemperaturzeitabschnitt zwischen 100°C und 650°C, bevorzugt bei 300°C, und während dem Hochtemperaturzeitabschnitt mindestens 50°C höher als während dem Niedertemperaturzeitabschnitt, bevorzugt bei 450°C. Das Aufheizen und Absenken der Temperatur des Gassensors innerhalb eines Zyklus muss nicht plötzlich erfolgen, sondern kann langsam erfolgen, wobei Aufheiz-Geschwindigkeit und Abkühl-Geschwindigkeit nicht übereinstimmen müssen.

Ebenfalls muss der Beginn eines Temperaturzyklus nicht unbedingt mit dem Beginn einer Gasaustauschperiode übereinstimmen, beide können zeitlich verschoben nebeneinander ablaufen.

Gemäss einer besonders bevorzugten Ausführungsform des erfindungsgemässen Verfahrens, die sich das notwendige, von reduzierenden Gasen möglichst befreite Referenzgasgemisch auf
einfachste Weise selbst herstellt, wird das zu untersuchende
Gasgemisch mittels eines Kolbens durch den mit einer Heizvorrichtung beheizten Gassensor hindurch oder über diesen
hinweg in der Weise gesaugt und dann zurückgedrückt, dass
praktisch das gesamte in der Messkammer befindliche zu untersuchende Gasgemisch mit der Oberfläche des Gassensors in
Berührung kommt, wodurch eine vollständige oder möglichst
vollständige Umsetzung der reduzierenden Gase an der Oberfläche des Gassensors erfolgt und beim Ausblasen der Messkammer durch Zurückdrücken des Kolbens ein praktisch von reduzierenden Gasen freies zu untersuchendes Gasgemisch den Gassensor passiert.

Als Gassensor kann im erfindungsgemässen Verfahren sowohl
ein Halbleitergassensor, der bevorzugt ein Halbleitermetalloxid enthält, als auch ein nach dem Prinzip der katalytischen
Verbrennung arbeitender Pellistor verwendet werden.

Gemäss einer bevorzugten Ausführungsform des in dem erfindungsgemässen Verfahren verwendeten Gasdetektors wird das
Volumen der Teile, die das zu untersuchende Gasgemisch
passiert, möglichst gering gehalten, damit das Totvolumen
auf ein Minimum reduziert wird.

Bei einer Anordnung zur Durchführung des erfindungsgemässen
Verfahrens ist neben einer mit einer Einlassöffnung für das
zu untersuchende Gasgemisch und einem auf eine vorbestimmte
Temperatur beheizbaren Gassensor versehene Messkammer eine

0157237

Referenzkammer vorgesehen, die über wenigstens eine Oeffnung
mit der Messkammer in Verbindung steht und eine Vorrichtung
aufweist, die das zu untersuchende Gasgemisch periodisch
aus der Messkammer in die Referenzkammer saugt (Einsaugen)
und das praktisch von reduzierenden Gasen befreite Gasgemisch
in die Messkammer zurückdrückt (Ausblasen). Die Volumina
von Messkammer und Referenzkammer sind dabei so aufeinander
abgestimmt, dass bei jedem Einsaugen frisches zu untersuchendes Gasgemisch in die Messkammer eingesaugt und bei jedem
Ausblasen mindestens ein Teil des zu untersuchenden Gasgemisches durch die Einlassöffnung die Messkammer verlässt.
Es kann auch eine von der Einlassöffnung getrennte Auslassöffnung vorgesehen sein.

Die Vorrichtung zum Einsaugen und Ausblasen des zu untersuchenden Gases besteht aus einem üblichen Luftbewegungsgenerator. Dieser Luftbewegungsgenerator bildet vorzugsweise eine
Wand oder einen Wandteil der Referenzkammer, durch deren
Bewegung das Volumen der Referenzkammer periodisch mit einer
bestimmten Frequenz verändert wird.

Gemäss bevorzugten Ausführungsformen der Erfindung kann der
Luftbewegungsgenerator z.B. als elektromagnetisch, elektrostatisch, piezoelektrisch oder thermomechanisch erregbare
Membran in der Art eines Lautsprechers ausgebildet sein,
eine Piezo-Folie vom Typ PVDF aufweisen, ein bimorphes piezoelektrisches oder bimetallisches Element enthalten oder eine
durch Mikrolithographie erzeugte dünne Siliziumfolie aufweisen.

Gemäss einer besonders bevorzugten Ausführungsform dient
ein Philips-Woofer AD 4060/W4 als Luftbewegungsgenerator.

Zur besseren Steuerung der Ströme von Referenzgas und zu
untersuchendem Gasgemisch kann der erfindungsgemäss verwende-

0157237

te Gasdetektor bevorzugt Membranventile enthalten, die den
Gasstrom je nach der Strömungsrichtung selbsttätig durchlassen oder blockieren.

Gemäss einer weiteren bevorzugten Ausführungsform wird die
Referenzkammer so gestaltet, dass ihr Volumen grösser ist,
als das Volumen der Messkammer. Dadurch wird einerseits
sichergestellt, dass der Inhalt der Messkammer bei jeder
Gasaustausch-Periode durch frisches Gasgemisch ersetzt

wird, und andererseits wird bei Ausbildung einer Referenzkammerwand als schwingende Membran mit relativ grosser Fläche schon bei geringer Schwingungsamplitude der Wand das Gas in der Messkammer weitgehend oder fast vollständig und mit geringem Energieaufwand ausgetauscht. Gemäss einer weiteren Ausführungsform wird vor der schwingenden Membran eine Schutzmembran angebracht, welche die sich bewegende Membran vor der Einwirkung erhöhter Temperatur schützt.

Gemäss einer weiteren bevorzugten Ausführungsform wird die Referenzkammer so gestaltet, dass ihr Volumen beim Ausblasen praktisch Null wird. Dies kann beispielsweise dadurch erreicht werden, dass der Luftbewegungsgenerator als schwingende Membran ausgebildet wird, die sich beim Ausblasen dicht an eine, z.B. konusförmige, Auflage anlegt.

Gemäss weiteren Ausgestaltungen des in dem erfindungsgemässen Verfahren angewendeten Gasdetektors befindet sich in der Referenzkammer, vorzugsweise in der Oeffnung, bzw. den Oeffnungen zwischen Mess- und Referenzkammer ein zusätzliches Filter zur Adsorption von Gasen. Zusätzlich oder anstelle dieses Filters kann ein entsprechendes Filter vor der Einlassöffnung angeordnet werden. Diese Filter sind durch Ausheizen in gewissen Zeitabständen regenerierbar.

Gemäss einer weiteren Ausführungsform des im erfindungsgemässen Verfahren angewendeten Gasdetektors kann sich in der Referenzkammer ein zweiter Sensor, ein Referenzsensor, befinden, der z.B. nur Wasserdampf misst.

Bei einer weiteren bevorzugten Ausführungsform des im erfindungsgemässen Verfahren angewendeten Gasdetektors können auch die Messkammer und die Referenzkammer ohne Einschnürung direkt ineinander übergehen, d.h. der Gassensor befindet sich in einer Kammer, die sowohl Messkammer als auch Referenzkammer ist und von der mindestens eine Wand oder ein Teil einer Wand als Luftbewegungsgenerator ausgebildet ist.

Die Auswerteschaltung erfasst die elektrische Leitfähigkeit σ des Gassensors und erzeugt ein Spannungssignal, das über eine mathematische Funktion mit σ verknüpft ist. Die Form dieser mathematischen Funktion kann entweder linear oder nichtlinear, z.B. logarithmisch, in σ sein und ist durch die gewählte elektronische Schaltung in der Auswerteschaltung bestimmt.

Die Auswerteschaltung misst diese Spannung entweder kontinuierlich, nimmt daraus geeignete Werte und vergleicht diese mit gespeicherten Werten oder tastet diese Spannung nur zu vorbestimmten Zeiten, z.B. am Ende jeder Periode des Temperaturzyklus ab und vergleicht sie mit anderen Werten, z.B. mit dem während der Einsaugphase auftretenden Höchstwert. Aus diesen Vergleichen kann die Auswerteschaltung, die ganz oder auch nur teilweise in dem im erfindungsgemässen Verfahren verwendeten Gasdetektor enthalten ist, entscheiden, ob reduzierende Gase im zu untersuchenden Gasgemisch enthalten sind, welcher Art diese reduzierenden Gase sind und welche Konzentration sie haben.

Die Erfindung, sowie zweckmässige Weiterbildungen derselben werden anhand der in den Figuren dargestellten Ausführungsbeispielen näher erläutert. Es zeigen:

Fig. 1 und 2    einen vereinfachten Querschnitt durch einen erfindungsgemässen Gasdetektor,

Fig. 3a        ein Schaubild der elektrischen Leitfähigkeit $\sigma$ (angegeben in $\Omega^{-1}$) in Abhängigkeit von der Zeit t, wenn die Periode des Temperaturzyklus länger ist als die Gasaustauschperiode,

Fig. 3b        ein zur Fig. 3a gehörendes Schaubild der Temperatur des Gassensors,

Fig. 3c        die Bewegungsrichtung des Luftbewegungsgenerators 4 in Fig. 1 und die Gaszusammensetzung in der Messkammer,

Fig. 4a        ein Schaubild der elektrischen Leitfähigkeit $\sigma$ (angegeben in $\Omega^{-1}$) in Abhängigkeit von der Zeit t, wenn die Periode des Temperaturzyklus die halbe Länge der Gasaustauschperiode hat,

Fig. 4b        ein zur Fig. 4a gehörendes Schaubild der Temperatur des Gassensors,

Fig. 4c        die Flussrichtung durch die Messkammer bei der Einlassöffnung 9,

Fig. 5a        ein Schaubild der elektrischen Leitfähigkeit $\sigma$ in Abhängigkeit von der Zeit t mit abgeändertem Heizzyklus bei gleichbleibendem Verhältnis der Längen des Temperaturzyklus zur Austauschperiode,

Fig. 5b        ein zur Fig. 5a gehörendes Schaubild der Temperatur des Gassensors,

0157237

Fig. 5c &ie Flussrichtung durch die Messkammer bei der Einlassöffnung 9,

Fig. 6 eine graphische Darstellung der Differenz $B_1-B_2$ nach Fig. 4 als Funktion der Konzentration an reduzierendem Gas,

Fig. 7 den Zusammenhang zwischen den Differenzen $B_1-B_2$ und $A_2$ nach Fig. 4,

Fig. 8 den Zusammenhang zwischen $B_1$ nach Fig. 4 und der Konzentration an reduzierendem Gas,

Fig. 9 mögliche Kombinationen des Temperaturzyklus mit der Gasaustauschperiode,

Fig. 10 mögliche Formen des Flusses und des Temperaturverhaltens während einer Periode des Gasaustausches bzw. Temperaturzyklus,

Fig. 11 bis 17 und Fig. 21 Ausgestaltungen von Gasdetektoren, die in dem erfindungsgemässen Verfahren angewendet werden können,

Fig. 18 bis 20 elektronische Schaltungen zur Auswertung der am Gassensor auftretenden elektrischen Leitfähigkeit $\sigma$.

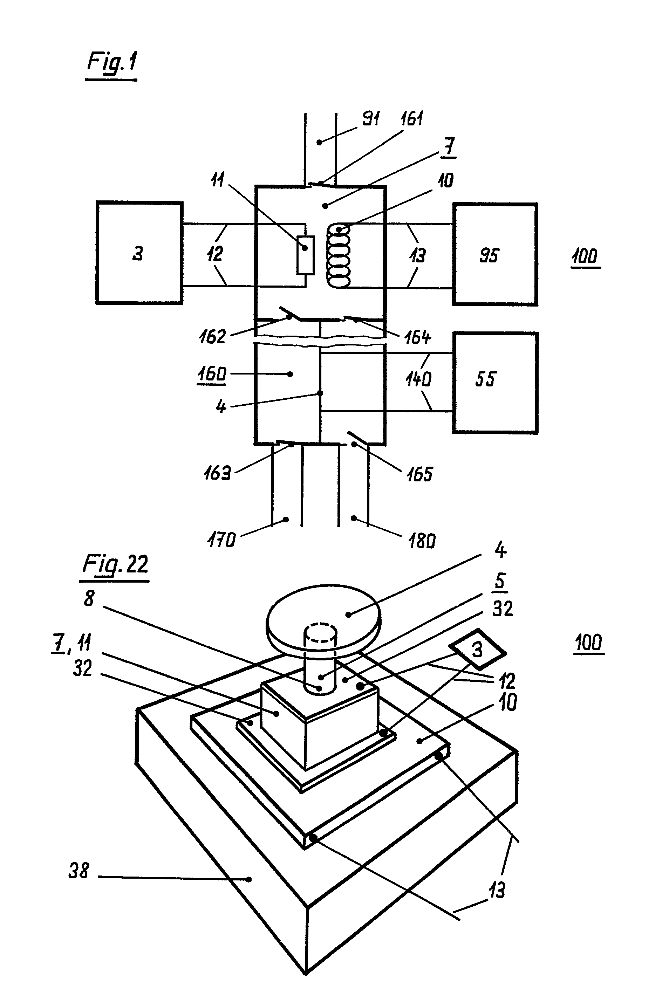

Das in Fig. 1 gezeigte Schema eines erfindungsgemässen Gasdedektors 100 besteht im wesentlichen aus einer Messkammer 7 mit dem selbstabdichtenden Membranventil 161, in der sich ein mit einer Heizung 10 versehender Halbleiter-Gassensor, der Gassensor 11, befindet und einer Luftbewegungskammer 160 mit den vier selbstabdichtenden Membranventilen 162, 163, 163 und 165, sowie dem Luftbewegungsgenerator 4, der es ermöglicht, in der Messkammer 7 das zu untersuchende Gasgemisch 170 periodisch durch das Referenzgasgemisch 180 zu ersetzen und durch die Ausblasöffnung 91 auszublasen. Die Heizspannungsquelle 95 liefert durch die Zuleitung 13 elektrischen Strom in die Heizung 10, die den Gassensor 11 periodisch in Abhängigkeit vom Gaswechsel in der Messkammer 7 auf vorbestimmte Temperaturen aufheizt. Die Heizung 10 kann den Gassensor 11 umgeben oder sie kann in das Material des Gassensors 11 eingelassen sein oder sich auf nur einer Seite oder auf zwei oder mehreren Seiten desselben befinden. In der in Fig. 1 dargestellten vereinfachten Form besteht der Luftbewegungsgenerator 4 aus einer dünnen piezoelektrischen bimorphen Membran, die sich durch Anlegen einer Wechselspannung aus dem Treiber 55 an die Drähte 140 periodisch nach links oder rechts durchbiegt und dadurch periodisch das Volumen der linken Hälfte der Luftbewegungskammer 160 verkleinert, bzw. das Volumen der rechten Hälfte der Luftbewegungskammer 160 vergrössert und umgekehrt. Der Gassensor 11 ist über elektrische Leitungen 12 mit einer Auswerteschaltung 3 verbunden. Durch die Ausblasöffnung 91 verlässt sowohl das zu untersuchende Gasgemisch 170 als auch das Referenzgasgemisch 180 nach dem Passieren des Gassensors 11 die Messkammer 7.

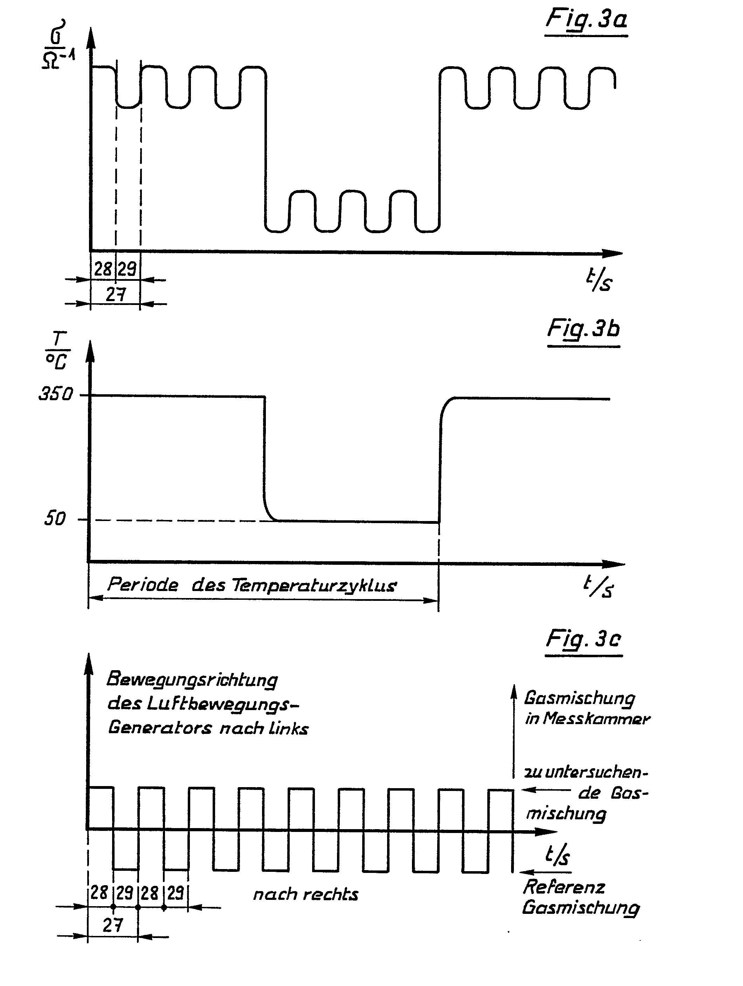

Im folgenden wird die Arbeitsweise eines in Fig. 1 schematisch dargestellten Gasdetektors 100 an Hand der Fig. 3 beschrieben.

Das zu untersuchende Gasgemisch 170 wird durch Bewegen des Luftbewegungsgenerators 4 nach rechts in die linke Hälfte der Luftbewegungskammer 160 gesogen, da sich das Membranventil 163 selbsttätig öffnet und das Membranventil 162 selbsttätig schliesst. Gleichzeitig wird bei dieser Bewegung des Luftbewegungsgenerators 4 das in der rechten Hälfte der Luftbewegungskammer 160 vorhandene Referenzgasgemisch 180 durch das selbsttätige Schliessen des Membranventils 165 und selbsttätige Oeffnen des Membranventils 164 in die Messkammer 7 gedrückt und verdrängt dadurch das dort darin befindliche zu untersuchende Gasgemisch 170, das die Messkammer 7 über das sich selbsttätig öffnende Membranventil 161 durch die Ausblasöffnung 91 verlässt. Während der Bewegung des Luftgenerators 4 nach rechts umgibt und durchdringt also das Referenzgasgemisch 180 den Gassensor 11 und bei der anschliessenden Bewegung des Luftgenerators 4 nach links wird das in der linken Hälfte der Luftbewegungskammer 160 vorhandene zu untersuchende Gasgemisch 170 sinngemäss in die Messkammer 7 gedrückt und umgibt und durchdringt den Gassensor 11. Während dieses Gasaustauschs in der Messkammer 7 wird die Temperatur des Gassensors 11 mittels der Heizung 10, die durch die Heizspannungsquelle 95 gesteuert wird, abwechselnd auf einer hohen Temperatur von etwa 330 °C und einer niederen Temperatur von etwa 60 °C gehalten. Gemäss einer bevorzugten Ausführungsform wird die Länge der Gasaustauschperiode 27 so gewählt, dass sie wesentlich kürzer ist, als die Länge des Temperaturzyklus, was in Fig. 3 dargestellt ist.

Die Volumina von Messkammer 7 und Luftbewegungskammer 160,
sowie die Bewegungsamplitude des Luftbewegungsgenerators
4 sind einerseits so aufeinander abgestimmt, dass die Messkammer 7 periodisch möglichst vollständig von zu untersuchendem Gasgemisch 170 oder von Referenzgas 180 gefüllt ist.
Das Volumen des Gassensors 11 und das Volumen der Messkammer
7 sind andererseits so aufeinander abgestimmt, dass der Gassensor 11 die Messkammer 7 möglichst vollständig ausfüllt.

In der Fig. 3a ist die elektrische Leitfähigkeit $\sigma$ des Gassensors 11 in $\Omega^{-1}$ gegen die Zeit t in Sek. aufgezeichnet.
In Fig. 3b ist im gleichen zeitlichen Massstab die Temperatur
des Gassensors 11 angegeben und in Fig. 3c ist die Bewegungsrichtung des Luftbewegungsgenerators 4 und die Art des Gasgemisches in der Messkammer 7 des in Fig. 1 gezeigten erfindungsgemässen Gasdetektors 100 aufgezeichnet.

Betrachtet man die elektrische Leitfähigkeit $\sigma$ des Gassensors
11 in Abhängigkeit von der Zeit, so erkennt man, dass während
der Zeit mit hoher Heizspannung = 5,5 V (Temperatur des Gassensors 11 = 330 °C) die elektrische Leitfähigkeit $\sigma$ generell
um einen hohen Wert periodisch schwankt, wobei die Länge
der Periode dieser Schwankungen der Periodenlänge 27 des
Gasaustausches entspricht, d.h. die elektrische Leitfähigkeit $\sigma$ ist höher, wenn das zu untersuchende Gasgemisch 170,
das reduzierende Gase enthält, in der Messkammer 7 vorliegt
und ist niedriger, wenn Referenzgasgemisch 180 ohne oder
in geringerer Konzentration vorhandene reduzierende Gase
in der Messkammer 7 vorliegt. Wird die Temperatur des Gassensors 11 auf 60 °C gesenkt (Heizspannung = 0,6 V), so zeigt
der Gassensor 11 eine elektrische Leitfähigkeit $\sigma$ , die um
einen generell tieferen Wert periodisch schwankt, wobei die
Länge der Periode dieser Schwankungen wieder mit der Länge der Periode 27 des Gasaustausches übereinstimmt. Die Grösse dieser Schwankungen in $\sigma$ ist bei tieferer Temperatur des Gassensors 11 aber verschieden von jener bei hoher Temperatur des Gassensors 11. Wie Experimente zeigten, ist das Verhältnis der Amplitude der Schwankungen in $\sigma$ (= AC-Amplitude) von hoher zu tiefer Heiztemperatur abhängig von der Art der im zu untersuchenden Gasgemisch enthaltenen reduzierenden Gase. So zeigt der Gassensor 11 z.B. für $CH_4$ bei hoher Heiztemperatur starke, mit der Gasaustauschperiode 27 synchron laufende Schwankungen der elektrischen Leitfähigkeit $\sigma$, bei einer tiefen Heiztemperatur von 60 °C aber sehr geringe Schwankungen in $\sigma$ . Für $H_2$ zeigt der Gassensor 11 aber sowohl für hohe als auch für tiefe Heiztemperaturen grosse Schwankungen in $\sigma$, die synchron mit der Periode des Gasaustausches verlaufen.

Die Auswerteschaltung 3 wandelt diese periodischen Schwankungen von $\sigma$ in ein Wechselspannungssignal (AC-Signal) um, dessen Periode gleich der Gasaustauschperiode 27 ist, und bestimmt davon die Amplitude (= AC-Amplitude). Aus dem Verhältnis der AC-Amplitude zwischen hoher und tiefer Heiztemperatur entscheidet die Auswerteschaltung 3, welches reduzierende Gas das zu untersuchende Gasgemisch 170 enthält. Falls die AC-Amplitude z.B. bei hoher Temperatur einen kritischen Wert überschreitet und die Auswerteschaltung 3 die Anwesenheit eines gefährlichen Gases bestimmt hat, löst die Auswerteschaltung 3 ein Alarmsignal aus.

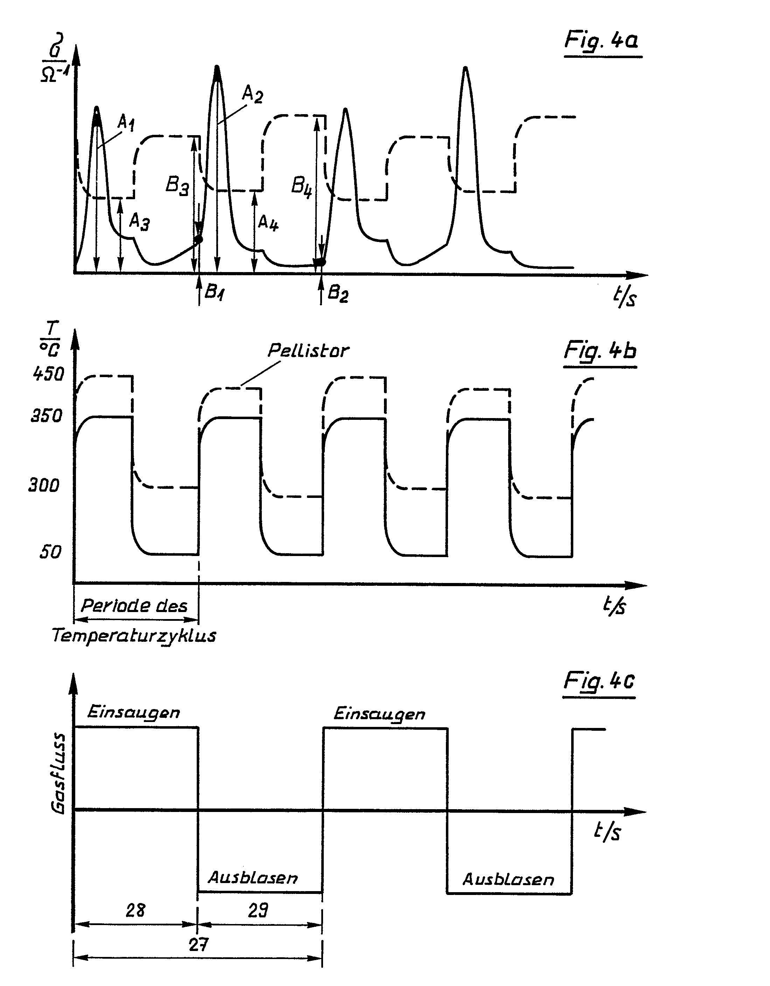

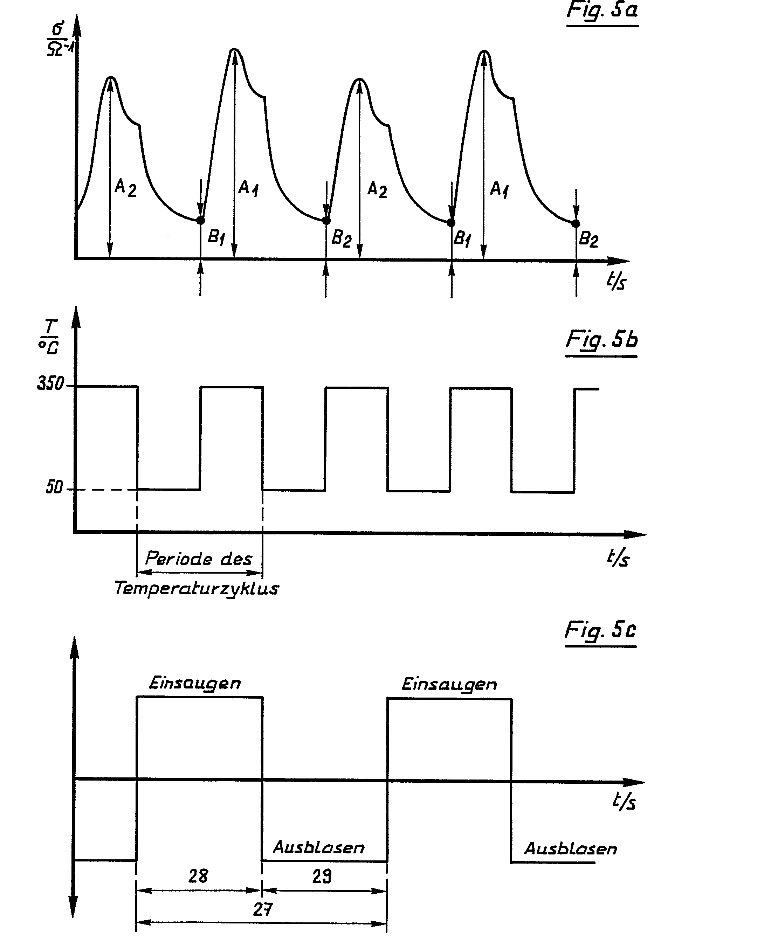

Die in Fig. 4 und 5 beschriebenen zeitlichen Abfolgen der Temperatur und des Gasaustausches können mit dem in Fig. 1 dargestellten Gasdetektor 100 ebenfalls erzeugt werden, indem die Länge der Gasaustauschperiode und der Periode des Temperaturzyklus entsprechend aufeinander abgestimmt werden.

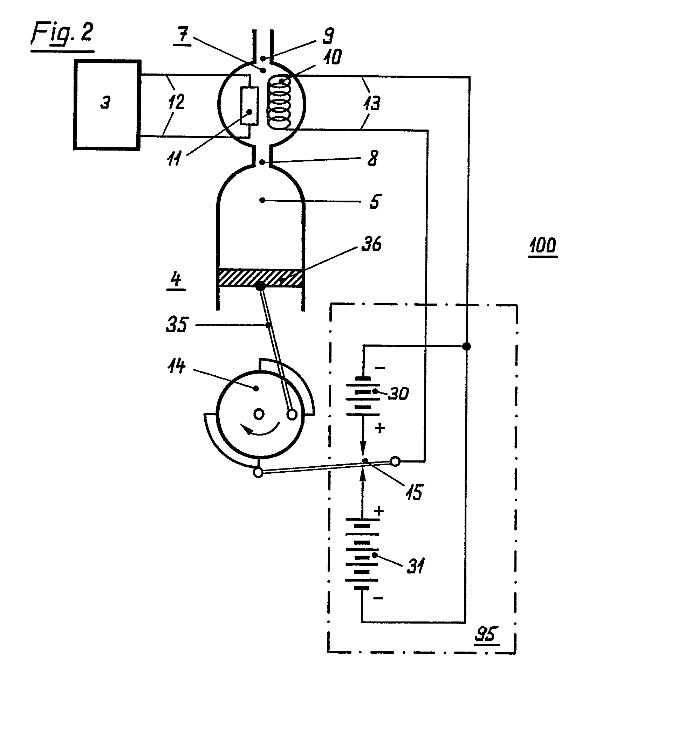

Die Fig. 4 und 5 sollen aber der Einfachheit halber an Hand des in Fig. 2 dargestellten, besonders bevorzugten Gasdetektors 100 beschrieben werden.

Ist das Referenzgasgemisch 180 nicht frei von reduzierenden Gasen, sondern enthält eine genau bekannte Konzentration an reduzierendem Gas, so kann der in Fig. 1 gezeigte erfindungsgemässe Gasdetektor 100 auch dazu benützt werden, um die kontinuierliche Herstellung einer Gasmischung, die reduzierende Gase in bestimmten Konzentrationen aufweisen soll, zu überwachen und zu regeln. Haben das Referenzgasgemisch und das zu untersuchende Gasgemisch dieselbe Konzentration an reduzierenden Gasen, so nimmt das durch den Gasaustausch bedingte AC-Signal ein Minimum an oder wird sogar ganz Null. Die Auswerteschaltung 3 wird deshalb als Regeleinheit eingesetzt, um die Konzentration der herzustellenden Gasmischung so einzustellen, dass diese AC-Signale eine minimale Amplitude aufweisen. Soll die herzustellende Gasmischung z.B. sowohl $H_2$ als auch $CH_4$ in genau bestimmten Konzentrationen enthalten, so müssen sowohl das AC-Signal bei hoher als auch bei tiefer Temperatur minimal werden, was durch entsprechende Aenderung der Zugabe von $H_2$ oder $CH_4$ zur herzustellenden Gasmischung erreicht wird und was von der Auswerteschaltung 3 des erfindungsgemässen Gasdetektors 100 überwacht wird.

Das in Fig. 2 dargestellte Schema eines Gasdetektors 100 besteht im wesentlichen aus einer Messkammer 7, in der sich ein mit einer Heizung 10 versehener Gassensor 11 befindet, und einer Referenzkammer 5, in der sich ein Luftbewegungsgenerator 4 befindet, d.h. einer Vorrichtung, die es ermöglicht, das Gasgemisch in der Messkammer 7 durch Gasgemisch aus der Referenzkammer 5 zu ersetzen und einer Heizspannungsquelle 95, die den Gassensor 11 periodisch in Abhängigkeit vom Gaswechsel in der Messkammer 7 auf vorbestimmte Temperaturen erhitzt. Die Heizung 10 kann den Gassensor 11 umgeben oder sie kann in das Material des Gassensors 11 eingelassen sein oder sich auf nur einer Seite oder auf zwei oder mehreren Seiten desselben befinden. In der dargestellten vereinfachten Form besteht der Luftbewegungsgenerator 4 aus einer von einem nicht dargestellten Motor angetriebenen Exzenterscheibe 14, die über eine Pleuelstange 35 einen Kolben 36 periodisch hin- und herschiebt und dadurch das Volumen der Referenzkammer 5 periodisch verändert. Auf der Exzenterscheibe 14 befinden sich Nocken, die einen Mikroschalter 15 in der Weise betätigen, dass abwechselnd unterschiedliche Heizspannungen aus zwei Energiequellen 30 und 31 über die Leitungen 13 auf die Heizung 10 gegeben werden.

Der Gassensor 11 ist über elektrische Leitungen 12 mit einer Auswerteschaltung 3 verbunden. Ueber die Einlassöffnung 9 wird der Messkammer 7 das zu untersuchende Gasgemisch zugeführt. Ueber die Verbindungsöffnung 8 ist die Messkammer 7 mit der Referenzkammer 5 verbunden.

Im folgenden wird die Arbeitsweise eines in Fig. 2 schematisch dargestellten Gasdetektors 100 an Hand der Fig. 4 und 5 beschrieben und mit der Arbeitsweise eines bisher üblichen Gassensors verglichen.

Das zu untersuchende Gasgemisch wird mittels des Luftbewegungsgenerators 4 periodisch durch die Messkammer 7 in die Referenzkammer 5 gesaugt (Periode des Einsaugens 28) und dann wieder durch die Messkammer 7 hindurch herausgedrückt (Periode des Ausblasens 29). Während dieser Gasaustauschperiode 27 wird die Temperatur des Gassensors 11 mittels der Heizung 10 abwechselnd auf einer hohen Temperatur von etwa 350 °C und einer niederen Temperatur von etwa 50 °C gehalten. Gemäss einer bevorzugten Ausführungsform des erfindungsgemässen Verfahrens wird die Länge der Gasaustauschperiode 27 so gewählt, dass sie mit der doppelten Länge des Temperaturzyklus übereinstimmt, was in Fig. 4 und 5 dargestellt ist.

In den Fig. 4a und 5a ist die elektrische Leitfähigkeit $\sigma$ in $\Omega^{-1}$ gegen die Zeit t in Sek. aufgezeichnet. In den Fig. 4b und 5b ist in gleichem zeitlichen Massstab die Temperatur des Gassensors 11 angegeben und in den Fig. 4c und 5c ist der Gasfluss in der Messkammer bei der Einlassöffnung 9 aufgezeichnet.

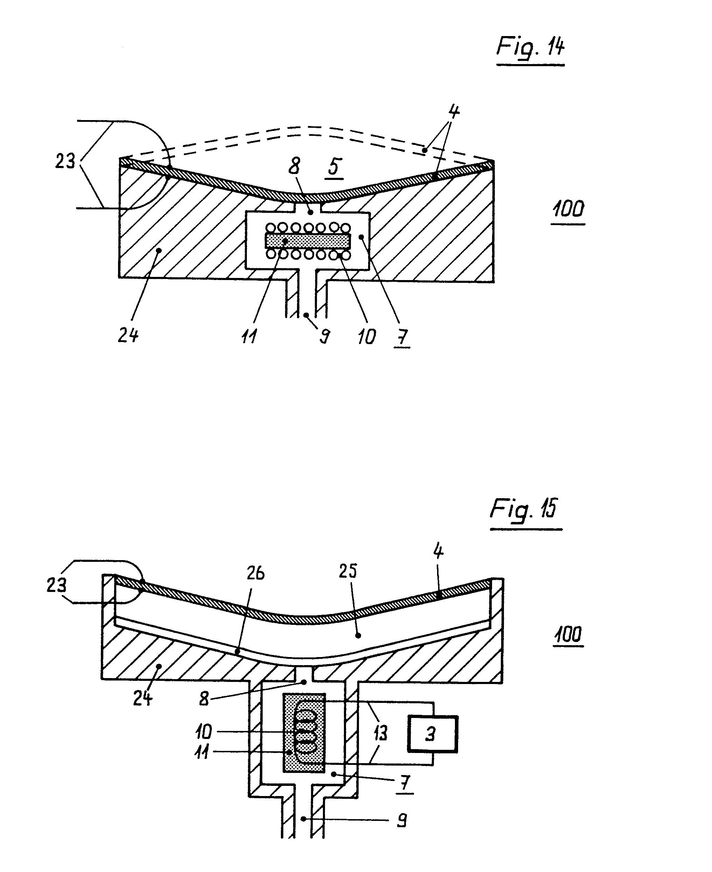

In Fig. 4a bezieht sich die ausgezogene Linie auf die elektrische Leitfähigkeit $\sigma$ eines Halbleiter-Gassensors 11 und die gestrichelte Linie auf einen Pellistor-Gassensor 11. Im folgenden wird das Verhalten eines Halbleiter-Gassensors 11 beschrieben. Das Verhalten eines Pellistor-Gassensors 11 wird erst bei der Fig. 15 besprochen.

Betrachtet man die elektrische Leitfähigkeit $\sigma$ des Gassensors 11 in Abhängigkeit von der Zeit, so erkennt man, dass während der Periode des Einsaugens 28 bei hoher Heizspannung = 6 V (Temperatur des Gassensors 11 = 350 °C) ein erster Peak, der sogenannte Oxidationspeak $A_1$, erhalten wird. Danach fällt das Signal wieder ab, um nach Umschalten der Heizspannung auf 0,5 Volt (Temperatur des Gassensors 11 = 50 °C) ein Minimum zu erreichen. Das Signal steigt dann wieder an und erreicht einen Adsorptionspeak genannten Punkt $B_1$. Zu diesem Zeitpunkt wird die Temperatur des Gassensors 11 wiederum auf 350 °C erhöht, und es beginnt die Periode des Ausblasens 29, wobei von zu detektierendem Gas praktisch freies (oder zu detektierendes Gas in geringerer Konzentration enthaltendes) Referenzgas durch die Messkammer 7 strömt. Es wird hierbei ein zweiter Oxidationspeak $A_2$ erhalten, danach sinkt das Ausgangssignal wieder ab, um nach Absenken der Temperatur des Gassensors 11 auf 50 °C wiederum ein Minimum zu erreichen. Beim Ausblasen 29 erreicht das Signal nicht wieder die Höhe des Adsorptionspeaks $B_1$, sondern bleibt auf dem viel kleineren Wert $B_2$. Zu diesem Zeitpunkt erfolgt wiederum Umschalten der Temperatur des Gassensors 11 auf 350 °C und Beginn einer neuen Einsaugperiode 28. Es wird wiederum ein erster Oxidationspeak $A_1$ und nach Umschalten der Temperatur des Gassensors auf 50 °C wiederum ein Adsorptionspeak $B_1$ erhalten. Für den Nachweis der reduzierenden Gase wird die Differenz $\Delta\sigma$ aus den Adsorptionspeaks $B_1$ und $B_2$ gebildet, d.h.

$$\Delta\sigma = B_1 - B_2$$

Beim Einsaugen 28 gelangt Luft plus nachzuweisendes Gas (plus Feuchtigkeit) an den Gassensor 11. Es ergeben sich der erste Oxidationspeak $A_1$ und der erste Adsorptionspeak $B_1$. Da das Gasgemisch reduzierende Gase enthält, können reduzierende Gase auf dem Gassensor 11 adsorbiert werden, und das Ausgangssignal des Gassensors 11 steigt entsprechend an bis zum Wert von $B_1$. Der Gassensor 11 ist jetzt mit reduzierenden Gasen voll beladen, die in der nächsten Heizperiode während des Ausblasens 29 oxidiert werden und den hohen Oxidationspeak $A_2$ ergeben. Beim weiteren Ausblasen 29 kühlt sich der Gassensor 11 ab. Da nun nur noch Gasgemisch (plus Feuchtigkeit) über den Gassensor 11 strömt, können keine reduzierenden Gase auf dem Gassensor 11 adsorbiert werden. Demzufolge ist kein Adsorptionspeak vorhanden, $B_2$ ist dementsprechend

klein. Beim nächsten Einsaugen 28 beginnt eine neue Gasaustauschperiode 27, bestehend aus Heizzyklus des Gassensors und Austauschperiode des Gasgemisches. In der Auswerteschaltung 3 wird durch eine Differenzschaltung die Differenz $\Delta\sigma$ des Signals $\sigma$

$$\Delta\sigma = B_1 - B_2$$

gebildet, die ein Mass für die Konzentration an nachzuweisendem Gas ist.

In Fig. 5a ist eine Ausgestaltung des erfindungsgemässen Verfahrens angegeben, bei der die Gasaustauschperiode 27 wie oben angegeben ist, der Heizzyklus jedoch so abgewandelt ist, dass während des Einsaugens 28 die Temperatur des Gassensors 11 zuerst auf einer niederen Temperatur von ca. 50 °C und dann während der zweiten Hälfte des Einsaugens 28 auf einer hohen Temperatur von ca. 350 °C gehalten wird. Es ergibt sich, dass die Differenz der Adsorptionpeaks $B_1$-$B_2$ annähernd gleich Null ist, die Differenz der Oxidationspeaks $A_1$ und $A_2$ jedoch so gross ist, dass sie für den Nachweis und zur Bestimmung der Konzentration von reduzierenden Gasen, bzw. Gasen, die am Gassensor 11 adsorbiert werden, geeignet ist. Weiterhin kann aus dem Vergleich zwischen $(A_1-A_2)$ und $B_1$ oder $(A_1-A_2)$ und $B_2$ sowie aus dem Vergleich zwischen $A_1$ und $B_1$ oder $A_1$ und $B_2$ bei gegebenem $(A_1-A_2)$, bzw. $A_1$ auf die Art des reduzierenden Gases geschlossen werden.

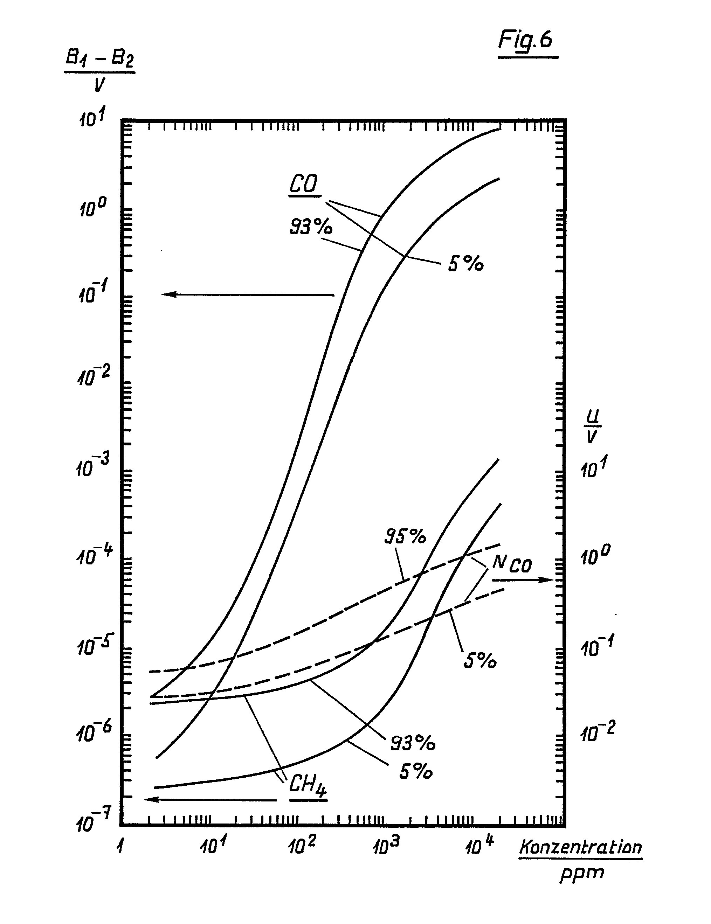

Für einen erfindungsgemässen Gasdetektor 100, der einen Temperatur- und einen Gasaustauschzyklus gemäss Fig. 4 aufweist und einen Taguchi TGS-12 Halbleiter-Gassensor als Gassensor 11 enthält, zeigt Fig. 6 die von der Auswerteschaltung 3 in ein Spannungssignal umgewandelten Werte von $B_1$ - $B_2$ als Funktion der Konzentration der Gase CO und $CH_4$.

Es ergibt sich, nach Fig. 6 in doppelt logarithmischer Darstellung, dass die Differenz $\Delta\sigma$ der Signale $B_1$-$B_2$ von der 5. Potenz der Quadratwurzel der Gaskonzentration abhängt,

0157237

d.h.

$$\Delta\sigma = \alpha \cdot [Gas]^{5/2} \qquad (1)$$

worin $\alpha$ eine Proportionalitätskonstante ist. Hierdurch ist ein ausserordentlich empfindlicher Nachweis von reduzierenden Gasen gegeben, bzw. von Gasen, die am Gassensor 11 adsorbiert werden.

In Fig. 6 stellt die gestrichelte Kurve $N_{CO}$ in doppelt logarithmischer Darstellung die als elektrische Spannung U ausgewertete elektrische Leitfähigkeit $\sigma$ eines normalen Gassensors für Kohlenmonoxid dar. Es ist deutlich der viel flachere Verlauf dieser Kurve zu erkennen, der einem Exponenten 1/2 in der analogen Gleichung (2) entspricht.

$$\sigma = \alpha \cdot [Gas]^{1/2} \qquad (2)$$

Der Exponent 5/2 in Gleichung (1) ist unabhängig von der Gasart, tritt aber bei schwieriger oxidierbaren Gasen, wie z.B. Methan, erst bei höheren Konzentrationen auf. Der Exponent 5/2 für eine konzentrationsabhängige Grösse ist für Gassensoren völlig neu und stellt einen grossen Fortschritt dar für die Konstruktion hochempfindlicher und präziser Gasdetektoren.

Für relative Luftfeuchtigkeiten von 5 bis 93 % (bei 27 °C) ist die Wasserabhängigkeit praktisch über den gesamten Konzentrationsbereich konstant, so dass bei Kenntnis der Wasserkonzentration die Wasserabhängigkeit einfach rechnerisch korrigiert werden kann. Für Kohlenmonoxid ist die Wasserabhängigkeit etwas grösser als für Wasserstoff, sie ist jedoch ebenfalls über den gesamten Konzentrationsbereich konstant.

Für Kohlenmonoxid, Methan und Wasserstoff ergeben sich ähnliche Kurven, wie sie in den Fig. 4a und 5a dargestellt worden sind. Die Grösse der Oxidationspeaks $A_1$ und $A_2$ sowie deren
Differenz $A_2 - A_1$ sind aber bei gegebener Grösse von $B_1 - B_2$
für jedes der Gase Wasserstoff, Kohlenmonoxid und Methan
verschieden. Aus diesem unterschiedlichen Verhalten kann auf
die Gasart (Wasserstoff, Kohlenmonoxid oder Methan) geschlossen werden.

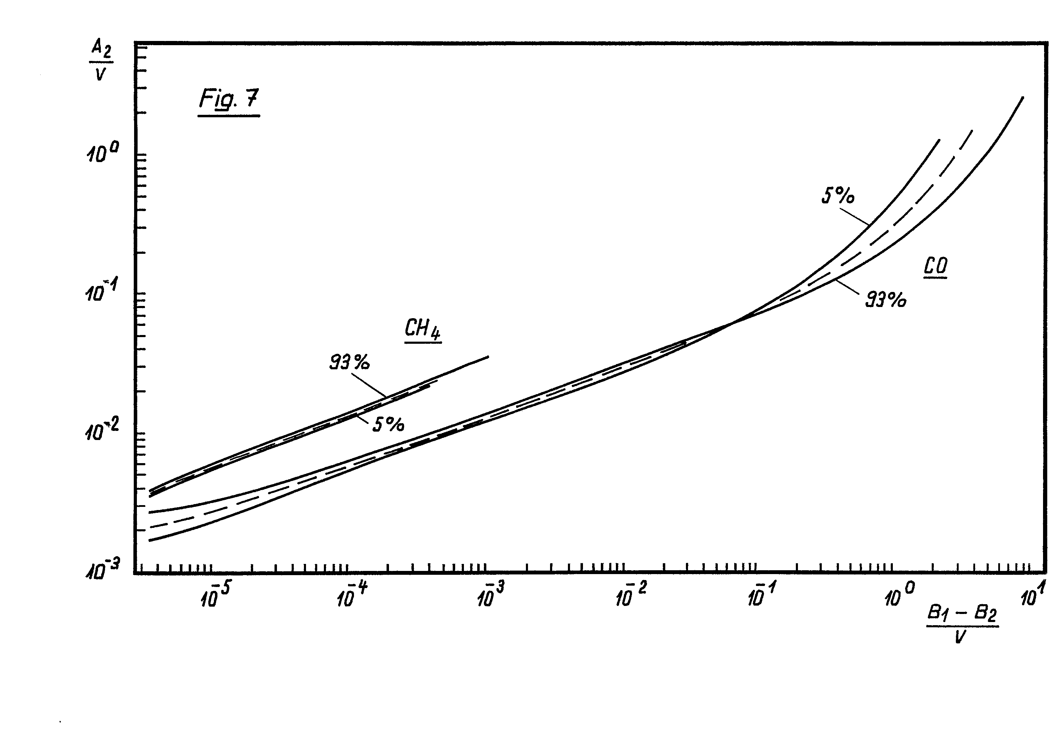

In Fig. 7 ist der Zusammenhang zwischen den Differenzen $B_1-B_2$
und $A_2$ für die Gase $CH_4$ und $CO$ mit relativen Luftfeuchten von
5 % bis 95 % bei 27°C aufgezeichnet. Fig. 7 zeigt eindeutig,
dass bei gleich grosser Differenz $B_1-B_2$ der Wert von $A_2$ für
$CO$ signifikant kleiner ist als für $CH_4$ für alle untersuchten
relativen Luftfeuchten. Aus dem Vergleich zwischen $(B_1-B_2)$
und $A_2$ bei gegebenem $(B_1-B_2)$ kann also die Art des reduzierenden Gases bestimmt werden. Eine solche eindeutige Unterscheidung, welches reduzierende Gas die Aenderung der elektrischen Leitfähigkeit σ am Gassensor 11 erzeugt (was mit
einem einzigen Sensor und rein rechnerisch erfolgen kann),
ist bis jetzt noch nicht bekannt und stellt einen grossen
Fortschritt dar zur selektiven Detektion von spezifischen
Gasen bei gleichzeitig äusserst hoher Empfindlichkeit des
Gasdetektors 100. Zur Fig. 7 analoge Kurven ergeben sich,
wenn die Differenz $A_2 - A_1$ oder $A_1$ allein gegenüber $B_1 - B_2$
oder $B_1$ allein aufgetragen wird, die ebenfalls zur Bestimmung
der Art der reduzierenden Gase ausgewertet werden können.

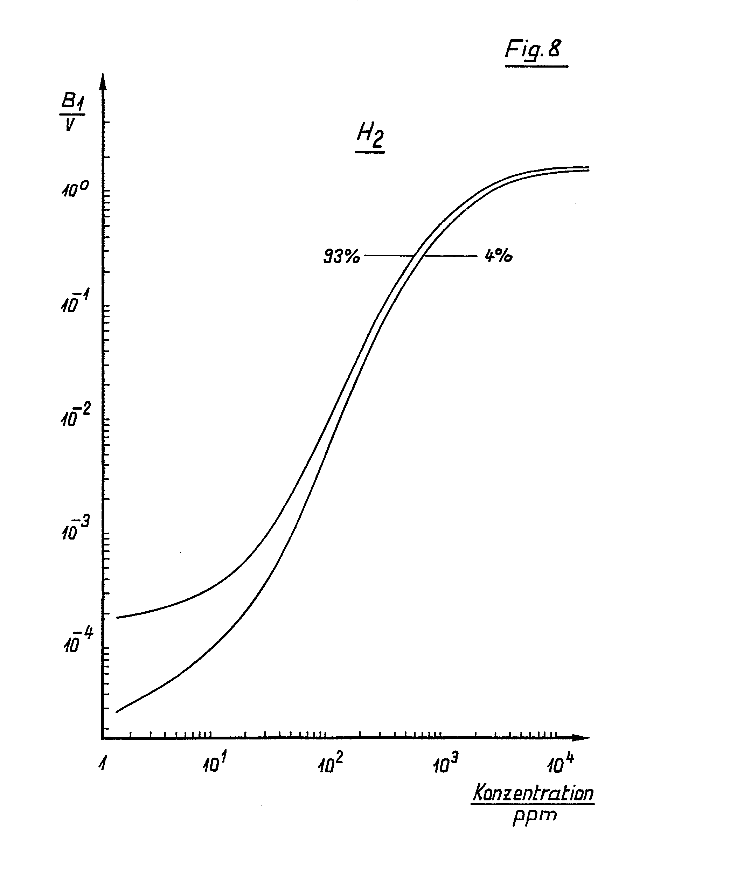

In Fig. 8 ist anstelle der Differenz $B_1-B_2$ des nach Fig. 4
betriebenen, im erfindungsgemässen Verfahren verwendeten Gasdetektors 100 der Wert von $B_1$ als Funktion der Konzentration
an reduzierendem Gas in doppelt logarithmischem Massstab dargestellt. Man erkennt auch hier wieder den ausserordentlich
steilen Anstieg der Messwerte mit steigender Konzentration
an reduzierendem Gas, was einem Exponenten von etwa 4/2 in
Gleichung (1) entspricht. Auch dies demonstriert eine viel
höhere Empfindlichkeit des erfindungsgemässen Verfahrens gegenüber dem herkömmlichen Betrieb eines Gassensors 11.

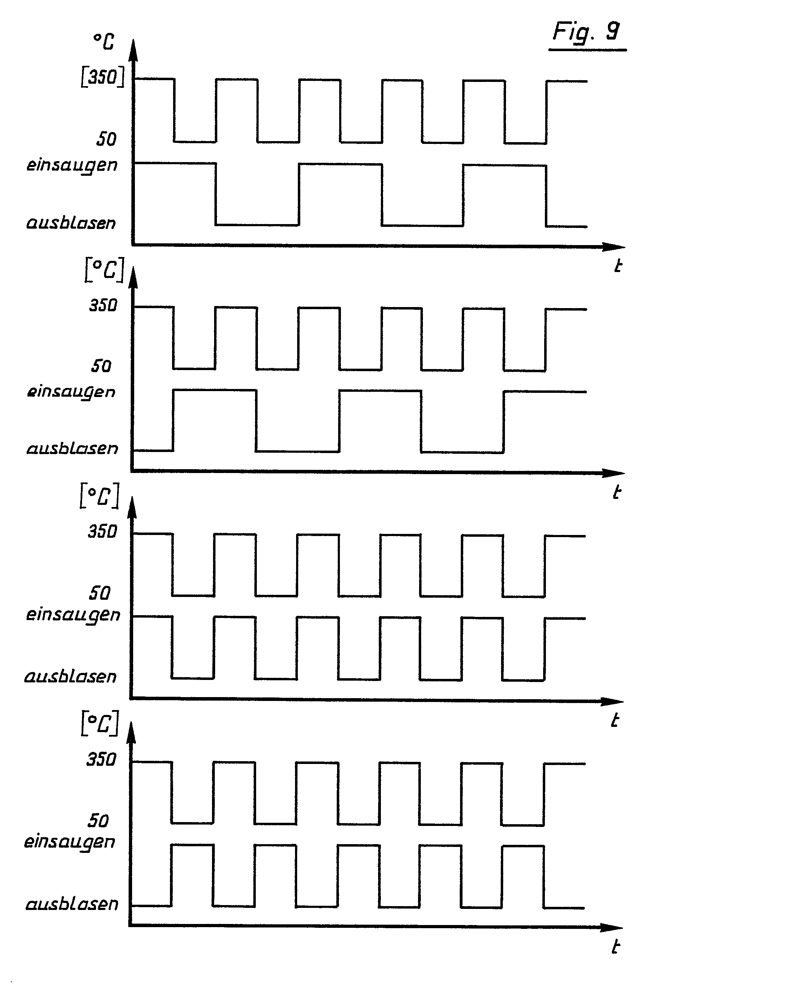

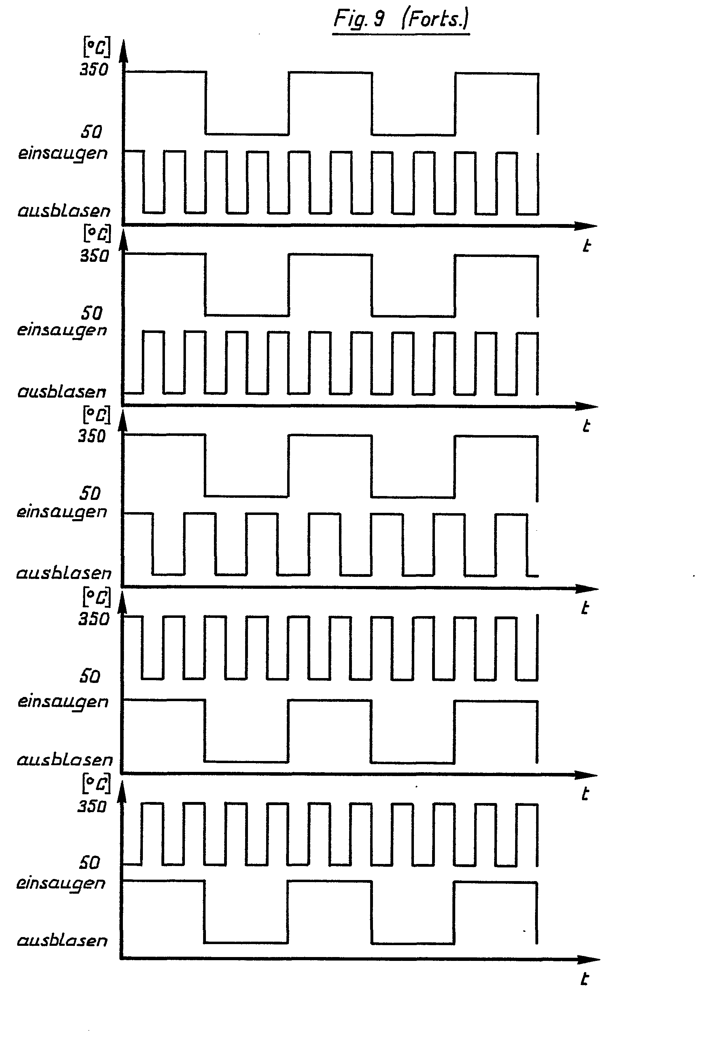

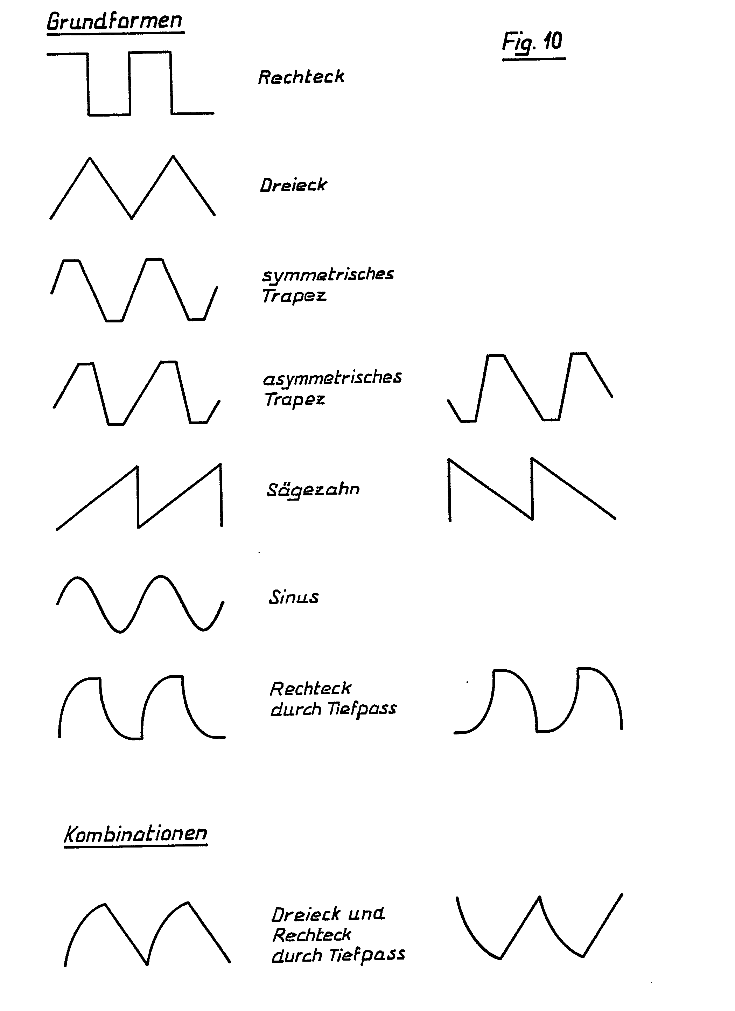

Die Zeiten für den Heizzyklus und für die Gasaustauschperiode 27 müssen nicht übereinstimmen, ebenfalls müssen auch Heizzyklus und Gasaustauschperiode 27 nicht zum selben Zeitpunkt beginnen, d.h. zwischen Heizzyklus und Austauschperiode kann eine Phasenverschiebung existieren. Ausserdem müssen diese Zykluszeiten nicht gleich lang sein: für eine optimale Anpassung an bestimmte Gase kann der Zeitabschnitt der hohen Temperatur kürzer oder länger gewählt werden, als der Zeitabschnitt der niedrigen Temperatur. Ausserdem kann durch Variation der Heiztemperatur und/oder der Kühltemperatur die Selektivität gegenüber bestimmten Gasen beeinflusst werden. In Fig. 9 sind mögliche Zyklen, d.h. Kombinationen von Heizzyklen mit Austauschperioden angegeben.

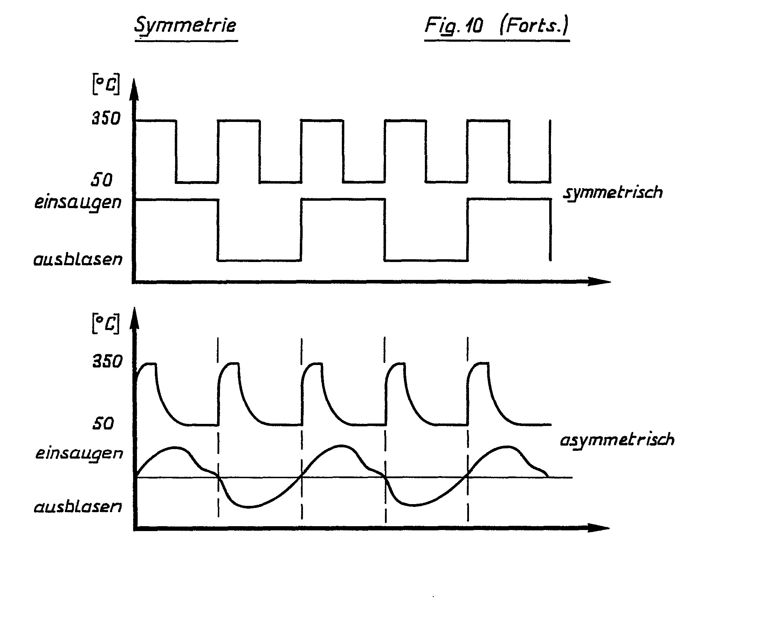

Ausserdem ist es nicht erforderlich, dass die Heizzyklen und Gasaustauschperioden, wie vorstehend angegeben, rechteckige und symmetrische Form aufweisen. Durch Variation der Geschwindigkeit des Einsaugens 28 und Ausblasens 29, sowie durch Variation der Aufheiz- bzw. Abkühlungsgeschwindigkeit können verschiedene Formen der Kurven für die Gasaustauschperiode bzw. die Heizzyklen erreicht werden, die auch unsymmetrisch sein können. Mögliche Formen sind in den Fig. 10 dargestellt. Alle angegebenen Formen können für die Heizzyklen und die Gasaustauschperioden unabhängig voneinander gewählt werden und beliebig miteinander kombiniert werden.

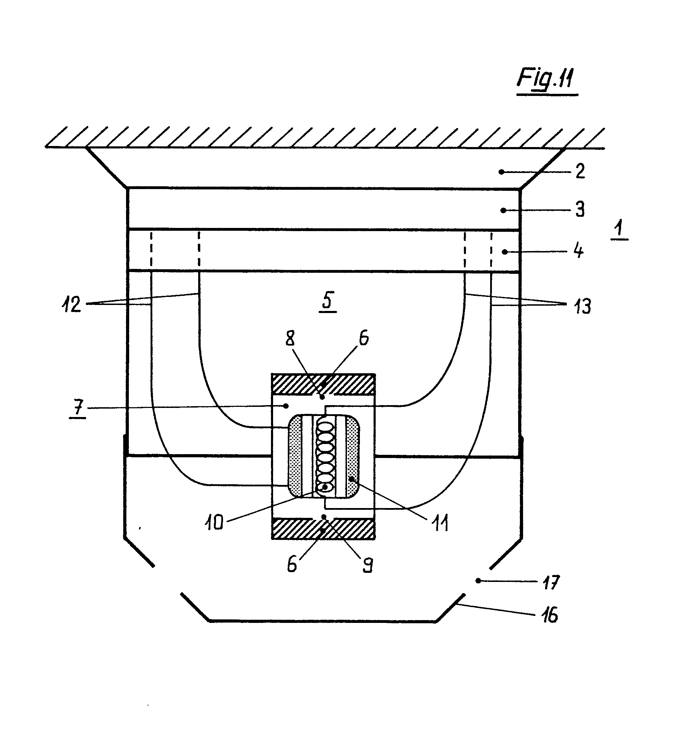

Die in Fig. 11 dargestellte, speziell zum Nachweis von reduzierenden Gasen geeignete Anordnung zur Gasdetektion besteht aus einem Detektoreinsatz 1, der in einen Sockel 2, z.B. einen üblichen Gasmeldersockel, einsetzbar ist. Der Detektoreinsatz 1 enthält eine elektrische Steuer- und Auswerteschaltung 3, oder zumindest einen Teil derselben, wobei der Rest der Schaltung in einer über Leitungen mit dem Sockel 2 verbundenen, nicht dargestellten Signalzentrale untergebracht sein kann. Von der Auswerteschaltung 3 wird ein Luftbewegungsgenerator 4 angesteuert, der eine Wand der anschliessenden Referenzkammer 5 oder einen Teil derselben bildet und deren Volumen sich periodisch mit einer bestimmten Frequenz, vorzugsweise zwischen 0,005 und 10 Hz, z.B. 0,1 Hz, ändert. Der Luftbewegungsgenerator 4 kann z.B. als elektromagnetisch, elektrostatisch, piezoelektrisch oder thermomechanisch erregbare Membran in der Art eines Lautsprechers ausgeführt sein oder eine Piezo-Folie vom Typ PVDF aufweisen oder ein bimorphes, piezoelektrisches oder bimetallisches Element enthalten. In miniaturisierten Gasdetektoren nach dem erfindungsgemässen Verfahren kann der Luftbewegungsgenerator 4 auch eine durch Mikrolithographie erzeugte Siliziummembran sein. In einem praktisch ausgeführten Beispiel erwies sich als Luftbewegungsgenerator ein Philips-Woover AD 4060/W4 als geeignet.

Die Referenzkammer 5 ist ausser der Verbindungsöffnung 8 zur Messkammer 7 vollständig gegenüber der Aussenatmosphäre abgeschlossen. Sie dient als Reservoir für das von reduzierenden Gasen mindestens teilweise, vorzugsweise vollständig, befreite Gasgemisch.

Die Referenzkammer 5 steht mit der Messkammer 7 über eine Verbindungsöffnung 8 geringen Querschnitts (ca. 0,03 $cm^2$) in Verbindung. In der Messkammer 7 befindet sich der Gassensor 11, im vorliegenden Fall ein normaler Gassensor TGS-812 (Taguchi/Figaro), der durch eine Heizung 10, die über elektrische Leitungen 13 mit elektrischer Energie versorgt wird, auf eine Temperatur im Bereich 30 bis 650 °C aufgeheizt werden kann. Als beste Arbeitstemperatur haben sich eine obere



0157237

Temperatur von 350 und eine untere Temperatur von 60 °C erwiesen. Der Gassensor 11 ist über elektrische Leitungen 12 mit der Auswerteschaltung 3 verbunden.

Die Messkammer 7 weist ein Volumen von ca. 0,10 $cm^3$ auf, während die Referenzkammer 5 ein Volumen von ca. 100 $cm^3$ aufweist, so dass das Volumenverhältnis mehr als 1 zu 1000 beträgt. Das Verhältnis der Summe der Volumina von Referenzkammer 5 und Messkammer 7 zur Summe der Volumina von Gassensor 11 und Heizung 10 beträgt in diesem Beispiel $2 \times 10^4:1$. In einer zur Fig. 11 analogen erfindungsgemässen Anordnung zur Gasdetektion wurde anstelle eines kommerziellen TGS-812 Metalloxidgassensors mit einem Volumen von ca. 5 $mm^3$ für Sensor und Heizung ein Miniaturgassensor eingesetzt, der ein Volumen für Sensor und Heizung von nur 0,05 $mm^3$ aufwies. Obwohl das Verhältnis der Summe der Volumina von Referenzkammer 5 und Messkammer 7 zur Summe der Volumina von Gassensor 11 und Heizung 10 in diesem Fall sogar $2 \times 10^7:1$ betrug, arbeitete diese erfindungsgemässe Anordnung zur Gasdetektion ebenfalls äusserst zufriedenstellend. Bei einer Schwingung des Luftbewegungsgenerators 4 wird ein der Schwingungsamplitude entsprechendes Volumen des zu untersuchenden Gasgemisches durch die Einlassöffnung 9 und durch die Messkammer 7 hindurch am Gassensor 11 vorbei in die Referenzkammer 5 gesaugt. Bei dieser Phase des Einsaugens 28 (vgl. Fig. 4 und 5) wird das zu untersuchende Gasgemisch mindestens teilweise von reduzierenden Gasen befreit. In umgekehrter Richtung wird durch eine Schwingung des Luftbewegungsgenerators 4 ein mindestens teilweise von reduzierenden Gasen befreites Gasgemisch (Referenzgas) durch die Verbindungsöffnung 8 in die Messkammer 7 hineingedrückt und verlässt diese durch die Einlassöffnung 9 (Phase des Ausblasens 29).

In der Referenzkammer 5 kann vor der Verbindungsöffnung 8
ein Filter 6 zur Adsorption von Restmengen von reduzierenden
Gasen oder anderen störenden Gasen angeordnet sein. Das Filter 6 wird durch Ausheizen in gewissen Zeitabständen regeneriert. Ein Filter zur Adsorption störender Gase kann auch
vor der Einlassöffnung 9 angeordnet sein. Auf den Detektoreinsatz 1 kann ein Gehäuse 16 aufgesteckt werden, das Oeffnungen 17 zum Eintritt des zu untersuchenden Gases, in diesem
Fall der Aussenatmosphäre, aufweist. Das Gehäuse 16 kann
durch seine geometrische Gestaltung und durch die Anordnung
der Oeffnungen 17 verschiedenen Umweltbedingungen angepasst
werden. Die Einlassöffnung 9 der Messkammer 7 kann auch
direkt über ein nicht dargestelltes Zuleitungsrohr mit dem
zu untersuchenden Gas beschickt werden. Da das erfindungsgemässe Verfahren weitgehend windunabhängig ist, ist ein Gehäuse 16 nicht unbedingt erforderlich.

Zur Erhöhung der Windunabhängigkeit ist in einem weiteren
Ausführungsbeispiel die Oeffnung 9 als eine ca. 1 cm lange
Kapillare mit einem Innendurchmesser von ca. 0,3 mm ausgebildet. Damit wird die Gasströmung am Sensor nur noch durch
die Bewegung des Luftbewegungsgenerators bestimmt, die Messungen der Gaskonzentration werden somit völlig unabhängig
von der Strömungsgeschwindigkeit des zu untersuchenden Luft-
Gas-Gemisches.

Beim Betrieb der beschriebenen Anordnung wird periodisch mit
einer bestimmten Frequenz, z.B. 0,1 Hz, Luft zwischen der
Referenzkammer 5 und der Messkammer 7 und damit auch zwischen
der Messkammer 7 und der Aussenatmosphäre hin und her bewegt.
Dabei sollte zweckmässigerweise das gesamte bewegte Luftvolumen mindestens etwa dem Volumen der Messkammer 7 entsprechen.
Damit wird das Messkammervolumen mindestens teilweise, im Idealfall praktisch vollständig, periodisch ausgetauscht, und es befindet sich abwechselnd Aussenluft (d.h. das zu untersuchende Gasgemisch) oder Luft aus der Referenzkammer 5 (d.h. Gasgemisch ohne reduzierende Gase) in der Messkammer 7 und damit im Bereich des Gassensors 11. Das bewegte Volumen hängt von der speziellen geometrischen Ausbildung der beiden Kammern 5 und 7, der Oeffnung 8, des Filters 6 und der Bewegungsamplitude des Luftbewegungsgenerators 4 ab.

Gleichzeitig wird die Temperatur des Gassensors 11 zwischen einem hohen Wert von bevorzugt 350 °C und einem tiefen Wert von bevorzugt 60 °C hin und hergeschaltet, wobei die Länge des Temperaturzyklus bevorzugt halb so gross ist wie die Länge der Periode des Gasaustausches und diese beiden Zyklen bevorzugt in der in Fig. 4 gezeigten zeitlichen Abfolge ablaufen. Die Form der Aufheiz- und Abkühlkurve des Gassensors 11 sowie des Gasaustausches in der Messkammer 7 muss dabei nicht unbedingt dem in Fig. 4 gezeigten Verlauf entsprechen, sondern kann auch nach den in Fig. 10 beschriebenen Kurven erfolgen.

Solange sich in der Aussenluft keine reduzierenden Gase befinden, ist die Differenz $B_1-B_2$ der elektrischen Leitfähigkeit $\sigma$ des Gassensors 11 praktisch gleich Null. Die Auswerteschaltung 3 tastet die elektrische Leitfähigkeit $\sigma$ des Gassensors 11 zu den Zeitpunkten von $B_1$ und $B_2$ ab, speichert diese Werte und liefert ein Spannungssignal, das linear zur Differenz $B_1-B_2$ ist und in diesem Falle sehr klein ist. Sobald aber die Aussenluft reduzierende Gase enthält, wechselt die Luft in der Messkammer 7 periodisch zwischen Luft mit geringem Gehalt an reduzierenden Gasen aus der Referenzkammer 5 und Luft aus der Aussenatmosphäre, die reduzierende Gase enthält. Gemäss Fig. 4 wird die Differenz $B_1-B_2$ nun sehr

gross und die Auswerteschaltung 3 erzeugt gemäss dieser grossen Differenz $B_1-B_2$ ein entsprechend grosses Spannungssignal. Da das erfindungsgemässe Verfahren einen ausserordentlich grossen dynamischen Bereich hat, wird der Wert von $B_1-B_2$ von der Auswerteeinheit 3 bevorzugt logarithmisch in ein Spannungssignal umgewandelt, das bei Ueberschreiten eines bestimmten Wertes die Auslösung eines Alarmsignals bewirkt.

Durch eine Quotientenschaltung kann die Auswerteschaltung 3 das Verhältnis zwischen den Differenzen $B_1-B_2$ und $A_2-A_1$ oder nur $A_2$ bilden. Da das Verhältnis von $B_1-B_2$ zu $A_2-A_1$ oder nur $A_2$ bei gegebenem Wert von $B_1-B_2$ bei konstanter zeitlicher Länge des Temperaturzyklus und Gasaustausches von der Art des reduzierenden Gases abhängt, kann die Auswerteschaltung 3 so ausgelegt werden, dass ein Alarmsignal in Abhängigkeit von dem Wert $B_1-B_2$ nur abgegeben wird, wenn das Verhältnis $(B_1-B_2):(A_2-A_1)$ oder $(B_1-B_2):A_2$ bei gegebenem $(B_1-B_2)$ einen vorbestimmten Wert annimmt, d.h. wenn in dem zu untersuchenden Gasgemisch ein ausgewähltes und in gefährlicher Konzentration auftretendes Gas vorhanden ist.

Das erfindungsgemässe Verfahren ist nicht nur mit Gassensoren 11 durchführbar, die ihren elektrischen Widerstand bei der Einwirkung von reduzierenden Gasen ändern, sondern auch mit sogenannten optischen Gassensoren, d.h. Gassensoren, die ihre optischen Eigenschaften bei der Einwirkung bestimmter Gase ändern. Den Adsorptionspeaks $B_1$ und $B_2$, bzw. den Oxidationspeaks $A_1$ und $A_2$ entsprechen in diesem Fall unterschiedliche optische Extinktionen des Gassensors.

Sehr gute Resultate werden auch erzielt, wenn für den Gassensor 11 anstelle eines Metalloxidhalbleiters ein Pellistor verwendet wird, der nach dem Prinzip der katalytischen Verbrennung arbeitet.

Ferner ist das erfindungsgemässe Verfahren nicht darauf beschränkt, dass das nachzuweisende Gas durch Oxidation oder Reduktion, d.h. durch eine chemische Reaktion, aus dem zu untersuchende Gasgemisch entfernt wird. Das nachzuweisende Gas kann auch beispielsweise durch Adsorption an einem Festkörper, z.B. auf einem Oszillator wie im Patent US 4 399 686, durch einen geeigneten Festkörperelektrolyten oder durch Herauspumpen durch eine Ionenpumpe (z.B. Sauerstoff) entfernt werden.

Verkürzt man die Austauschperiode des zu untersuchenden Gasgemisches, die für die Messungen in Fig. 4 ca. 20 Sek. beträgt, auf ca. 5 Sek., so erhält man anstelle des Exponenten 5/2 der oben angegebenen Gleichung kleinere Werte, d.h. die Empfindlichkeit des Gasdetektors 100 kann in einfacher Weise dadurch variiert werden, dass die Austauschfrequenz verändert wird. Dies ermöglicht einen Mehrstufenbetrieb, indem beispielsweise in der Nacht der Gasdetektor 100 auf der empfindlichsten Stufe betrieben wird, während am Tage eine weniger empfindliche Stufe eingestellt wird.

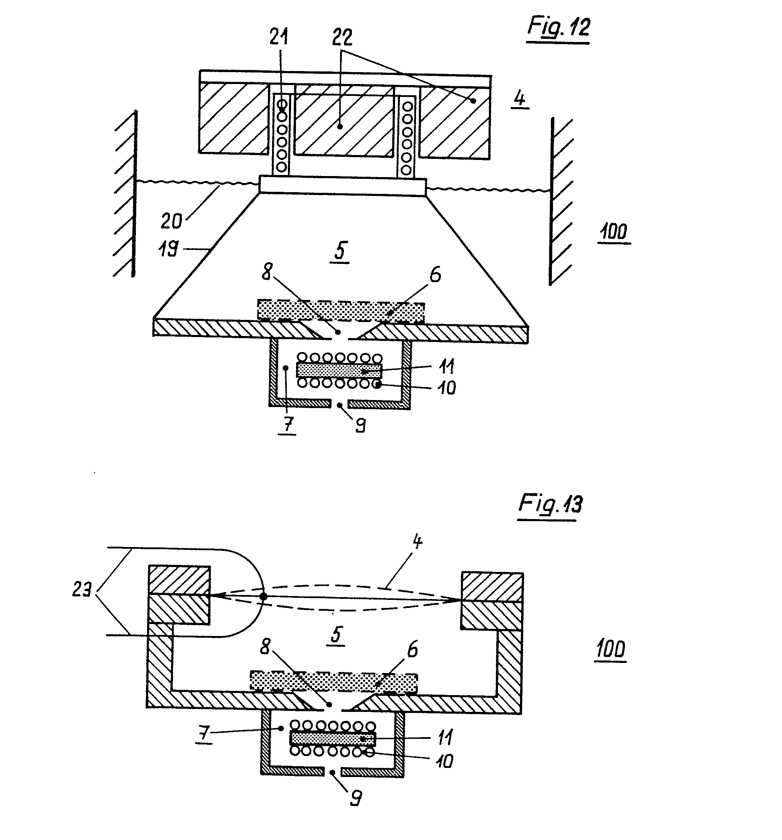

In Fig. 12 ist eine weitere Ausgestaltung eines in dem erfindungsgemässen Verfahren verwendeten Gasdetektors 100 dargestellt. Eine konisch ausgebildete Wand 19 der Referenzkammer 5 ist an einer Spule 21 befestigt, die von einer federnden Halterung 20 getragen wird und in einen Ringspalt eines Permanent-Magneten 22 hineinragt. Bei Erregung der Spule 21 durch eine Wechselspannung gerät die konische Wand 19 wie bei einem elektrodynamischen Lautsprecher in Schwingungen und ändert dadurch das Volumen der Referenzkammer 5 periodisch. Bei dieser Schwingung wird die Luft periodisch aus der Referenzkammer 5 durch das Filter 6 und die Oeffnung 8 in die Messkammer 7 hineingedrückt und wieder zurückgesogen.

In Fig. 13 ist eine weitere Ausgestaltung des Gasdetektors
100 dargestellt. Der Luftbewegungsgenerator ist als bimorphe
Piezo-Folie 4 ausgebildet. Je nach der an den beiden Seiten
mittels der Leitungen 23 angelegten Spannung erfährt diese
Piezo-Folie eine entsprechende Auslenkung. Wird nun an die
Leitungen 23 eine Wechselspannung angelegt, so gerät die
Piezo-Folie 4 in eine Schwingung, deren Frequenz der angelegten Wechselspannung entspricht. Das Volumen der Referenzkammer 5 schwankt mit der gleichen Frequenz.

In Fig. 14 ist eine Weiterentwicklung des in Fig. 13 beschriebenen Gasdetektors 100 dargestellt, wobei das Volumen
der Referenzkammer 5 im Endstadium der Ausblasphase 29 das
Volumen Null hat, d.h. das Totvolumen verschwindet praktisch.
Dies wird dadurch erreicht, dass in der Referenzkammer 5 eine
konusförmige oder auch ebene Auflage 24 vorgesehen ist, an
die sich die Piezo-Folie am Ende der Ausblasphase 29 dicht
anlegt. Dies ist in der Fig. 14 durch die ausgezogenen Linien
dargestellt. Am Ende der Einsaugphase 28 nimmt die Piezo-
Folie 4 die punktiert dargestellte Lage ein.

In Fig. 15 ist eine Weiterentwicklung des in Fig. 14 beschriebenen Gasdetektors 100 gezeigt. Die temperaturempfindliche, den Luftbewegungsgenerator 4 bildende Piezo-Folie
überträgt ihre Bewegung via das Arbeitsvolumen 25 auf die
Schutzmembran 26, die hier aus einer temperaturbeständigen,
sehr dünnen (1 - 10 µm) Metallmembran besteht.

Im Gegensatz zu Fig. 14, wo der Gassensor 11 ein Halbleiter-
gassensor ist, wird hier ein bekannter Pellistor als Gassensor 11 verwendet, dessen Heizung aus einer Heizwicklung 10
aus einer Drahtspirale besteht, deren elektrischer Widerstand einen stark positiven Temperaturkoeffizienten aufweist. Die Zuleitungen 13 der Heizwicklung 10 sind in diesem Fall identisch mit den Messleitungen 12 und enden in einer Auswerteschaltung 3 mit einer nicht gezeigten Heizspannungsquelle, die elektrische Energie über die Zuleitungen 13 zum Gassensor 11 liefert und diesen mit der Heizwicklung 10 periodisch auf 450 °C und 300 °C erhitzt.

Die gestrichelte Kurve in Fig. 4a zeigt die Leitfähigkeit dieser Heizwicklung 10 als Funktion der Zeit. Während der Einsaugphase 28 verbrennen bei der hohen Temperatur von 450 °C alle im zu untersuchenden Gasgemisch enthaltenen reduzierenden Gase am Gassensor 11. Die bei dieser Oxidation frei werdende Verbrennungswärme heizt die Heizung 10 zusätzlich auf, wodurch sich deren Leitfähigkeit σ erniedrigt. Während dieser Einsaugphase 28 wird das zu untersuchende Gasgemisch mindestens teilweise von reduzierenden Gasen befreit.

Die Temperatur des Gassensors 11 wird nun während der Einsaugphase 28 auf 300°C gesenkt und die elektrische Leitfähigkeit des Gassensors steigt drastisch an. Bei dieser tieferen Temperatur verbrennen nur noch leicht oxidierbare Gase, wie z.B. $H_2$, schwierig oxidierbare Gase wie z.B. $CH_4$, verbrennen aber nicht mehr. Die bei dieser Oxidation frei werdende Verbrennungswärme ist also kleiner als vorhin bei der Temperatur von 450 °C, wenn das zu untersuchende Gasgemisch sowohl leicht oxidierbare als auch schwierig oxidierbare reduzierende Gase enthält, sie ist aber gleich gross, wenn nur leicht oxidierbare reduzierende Gase vorhanden sind oder aber praktisch Null, wenn nur schwierig oxidierbare reduzierende Gase im zu untersuchenden Gasgemisch enthalten sind. Diese Verbrennungswärme erhitzt den Gassensor 11 also etwas und erniedrigt dadurch seine elektrische Leitfähigkeit $\sigma$ wieder etwas. In umgekehrter Richtung wird durch eine Bewegung der Schutzmembran 26 und des Luftbewegungsgenerators 4 ein mindestens teilweise von reduzierenden Gasen befreites Gasgemisch (Referenzgas) durch die Verbindungsöffnung 8 in die Messkammer 7 hineingedrückt und verlässt diese durch die Einlassöffnung 9 (Ausblasphase 29). Während dieser Zeit tritt keine oder eine viel kleinere zusätzliche Verbrennungswärme am Gassensor 11 auf. Der Gassensor 11 ist also während der Ausblasphase 29 sowohl bei hoher als auch bei niedriger Temperatur etwas kälter als während der Einsaugphase 28 und die elektrische Leitfähigkeit $\sigma$ ist deshalb während der Ausblasphase 29 generell höher. Durch die Auswerteschaltung 3 wird die elektrische Leitfähigkeit $\sigma$ der Heizung 10 in ein Spannungssignal umgewandelt, das an den Stellen von $A_3$, $A_4$, $B_3$ und $B_4$ in Fig. 4a gemessen wird, d.h. jeweils am Ende jedes Hochtemperaturzeitabschnitts und jedes Tieftemperaturzeitabschnitts und die Werte $A_3$, $A_4$, $B_3$ und $B_4$ liefert, die gespeichert werden und aus denen die Differenzen $(A_4-A_3)$ und $(B_4-B_3)$ gebildet werden. Das Verhältnis $(A_4-A_3) : (B_4-B_3)$ ist abhängig von der Art der im zu untersuchenden Gasgemisch enthaltenen reduzierenden Gase. Sobald der Wert $(A_4-A_3)$, der ein Mass ist für die gesamte Konzentration an reduzierenden Gasen, einen vorbestimmten Wert überschreitet, gibt die Auswerteschaltung 3 ein Alarmsignal ab und bestimmt aus dem Verhältnis $(B_4-B_3) : (A_4-A_3)$ auch noch, welcher Art das reduzierende Gas ist. Diese zusätzliche Information kann noch zum Erzeugen zusätzlicher Alarmsignale benützt werden, falls es sich z.B. erweist, dass das nachgewiesene reduzierende Gas auch noch giftig ist, wenn es sich dabei z.B. um CO handelt.

Gegenüber dem herkömmlichen Pellistorprinzip, das einen Mess-
und einen Referenzpellistor benötigt, weist dieser in dem
erfindungsgemässen Verfahren verwendete Gasdetektor 100 nur
einen einzigen Pellistor als Gassensor 11 auf. Da der Luftbewegungsgenerator 4 nur sehr wenig elektrische Leistung benötigt und der Pellistor während ca. der halben Zeit auf
einer tiefen Temperatur betrieben wird, weist der hier beschriebene Gasdetektor 100 einen ca. nur ein Drittel so
grossen Leistungsverbrauch auf wie herkömmliche Gasdetektoren, die ein Pellistor-Paar enthalten und dauernd bei hoher
Temperatur betrieben werden. Da die Differenzen $(A_4-A_3)$ und
$(B_4-B_3)$ sehr genau gemessen werden können und durch Langzeitschwankungen von Druck, Temperatur und Luftfeuchtigkeit kaum
beeinflusst werden, zeigt der hier beschriebene Gasdetektor
100 im Gegensatz zum herkömmlichen Pellistorprinzip auch noch
kleinste Konzentrationen von reduzierenden Gasen im zu untersuchenden Gasgemisch zuverlässig an.

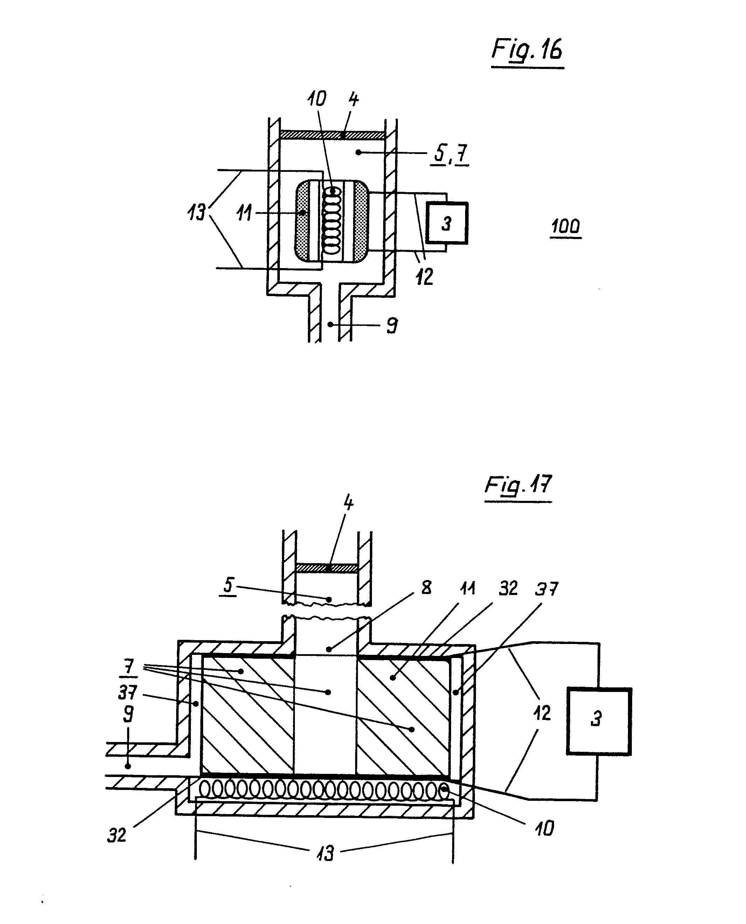

In Fig. 16 ist eine weitere Ausgestaltung eines im erfindungsgemässen Verfahren verwendeten Gasdetektor 100 dargestellt, der dank seiner äussert einfachen Bauweise für die
Massenproduktion sehr geeignet ist. Die Messkammer 7 und die
Referenzkammer 5 gehen ohne eine Oeffnung 8 direkt ineinander über, der Gassensor 11 mit seiner Heizung 10 befindet
sich also in einer Kammer, die zugleich Messkammer 7 und Referenzkammer 5 ist, wobei mindestens eine Wand oder ein Wandteil dieser Kammer als Luftbewegungsgenerator 4 ausgebildet
ist.

Das Verhältnis des Volumens der Messkammer = Referenzkammer
zur Summe der Volumina von Gassensor 11 und Heizung 10 beträgt in diesem Beispiel bei der Verwendung eines TGS-812
Gassensors ca. 5:1. Da der im erfindungsgemässen Verfahren verwendete Gasdetektor 100 durch die Auswerteschaltung 3 Differenzen $(A_2-A_1)$ und $(B_1-B_2)$ erzeugt, die von Aenderungen der Temperatur, des Druckes und der relativen Luftfeuchte praktisch unabhängig sind, können mit einem solchen Gasdetektor 100 reduzierende Gase viel empfindlicher und störungsfreier gemessen werden als mit einem der bisher üblichen Gassensoren, deren absolute elektrische Leitfähigkeit σ direkt zum Nachweis von Gasen verwendet werden.

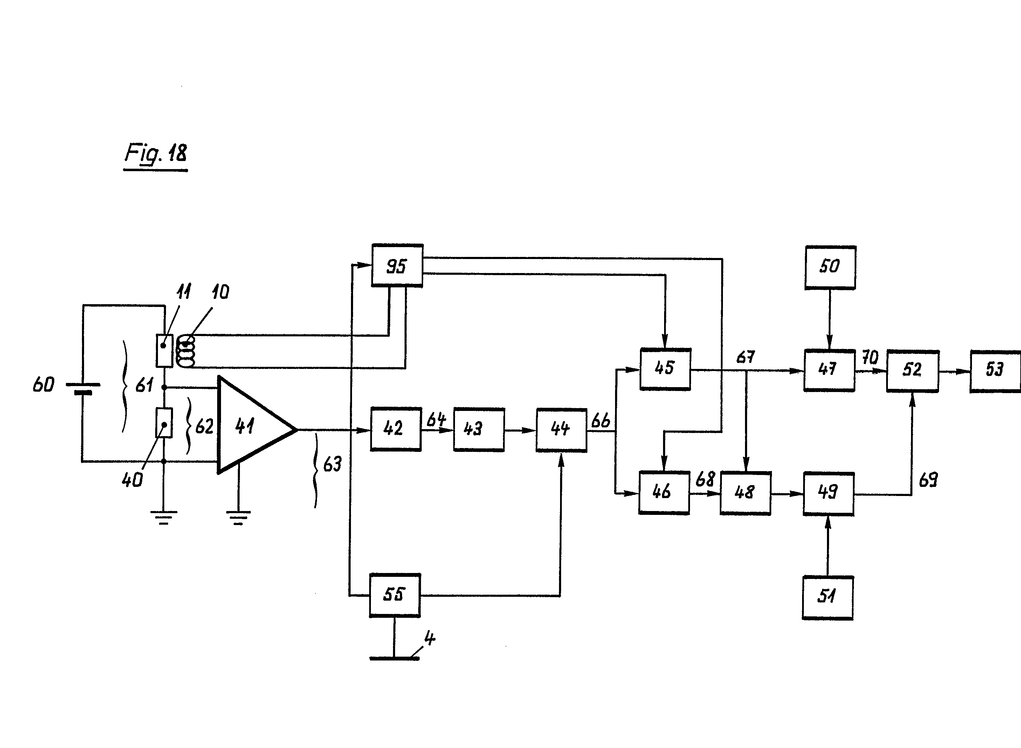

In Fig. 17 ist eine Weiterentwicklung des in Fig. 16 beschriebenen Gasdetektors 100 gezeigt, wobei zur besseren Erkennbarkeit der Details die Messkammer 7 in einem etwa dreissigmal grösseren Massstab gezeichnet ist als die Referenzkammer 5. Der Gassensor 11 besteht  aus einem hochporösen Stück eines quadratischen Metalloxidhalbleiters, mit den Massen von 1 x 1 x 1 $mm^3$, das in der Mitte ein Loch aufweist. Der Gassensor 11 hat elektrische Ableitungen 12, die auf zwei Elektroden 32 befestigt sind, die an zwei Seiten des quadratischen Metalloxidhalbleiters angebracht sind und zur Messung der elektrischen Leitfähigkeit σ des Gassensors 11 dienen. Ueber die Zuleitungsdrähte 13 wird der Heizung 10 elektrische Energie zugeführt, die zum Aufheizen des Gassensors 11 benötigt wird. Die Heizung 10 braucht nicht nur auf einer Seite des Gassensors 11 angebracht zu sein. Sie kann auch auf mehreren Seiten des Gassensors 11 diesen gleichmässig auf eine vorbestimmte Temperatur erwärmen. Zur Verringerung der Wärmeableitung sind die Wände der Messkammer 7 und Referenzkammer 5 bevorzugt aus einem wärmeisolierenden, gasdichten Material hergestellt.

Der Gassensor 11 füllt mit Ausnahme eines schmalen Spalts 37 an der Peripherie die gesamte Messkammer 7 aus, die bei der Oeffnung 8 direkt in die Referenzkammer 5 übergeht, deren Volumen durch den Luftbewegungsgenerator 4 periodisch verändert wird. Beim Bewegen des Luftbewegungsgenerators 4 wird das zu untersuchende Gasgemisch periodisch durch die Einlassöffnung 9 und durch den Gassensor 11 gesaugt (Einsaugen 28) und danach in umgekehrter Richtung wieder ausgestossen (Ausblasen 29). Durch die in Fig. 17 gezeigte Anordnung wird eine optimale Umsetzung der im zu untersuchenden Gasgemisch enthaltenen reduzierenden Gase erzielt. Das Verhältnis der Summe der Volumina von Gassensor 11 und Heizung 10 zur Summe der Volumina von Messkammer 7 und Referenzkammer 5 ist praktisch 1:1.

Mit einem Gasdetektor 100 in dieser Ausführungsform konnten noch kleinste Spuren von reduzierenden Gasen mit grösster Genauigkeit gemessen werden bei einem Leistungsverbrauch von nur ca. 25 mW elektrischer Energie, was ca. 1/20 der Leistung ist, die bisher verwendete Gassensoren benötigen und die ausserdem noch wesentlich weniger empfindlich sind.

Die Aufbereitung und Auswertung der Differenzen $(A_2-A_1)$ oder nur $A_2$ und $(B_1-B_2)$ durch die Auswerteschaltung 3 kann im Prinzip durch eine beliebige dem Fachmann bekannte elektronische Schaltung ausgeführt werden. Fig. 18 zeigt ein geeignetes Beispiel in Blockform, das auf das in Fig. 3 gezeigte erfindungsgemässe Verfahren anwendbar ist.

Der Gassensor 11 ist in Serie geschaltet mit einem Lastwiderstand 40, wobei über dieser Serieschaltung die Messspannung 61 der Spannungsquelle 60 liegt. Am Lastwiderstand 40 wird die Spannung 62 vom Verstärker 41 abgegriffen und dank der speziellen Verstärkerkennlinie in ein Spannungssignal 63 umgewandelt, das proportional zur elektrischen Leitfähigkeit $\sigma$ des Gassensors 11 ist. Der Verstärker 41 kann auch zweckmässigerweise eine logarithmische Charakteristik aufweisen, da der erfindungsgemässe Gasdetektor 100 gemäss Gleichung (1) einen sehr grossen dynamischen Bereich für die auftretenden AC-Signale 64 hat. Aus dem Spannungssignal 63, das aus einem langsam variierenden Gleichspannungsanteil (DC-Signal) mit überlagertem, bei der Frequenz des Luftbewegungsgenerators 4 liegenden Wechselspannungsanteil (AC-Signal) besteht, wird nun im AC-DC-Entkoppler 42 in ein reines AC-Signal 64 (z.B. durch Auskoppeln über einen geeignet gewählten Kondensator) gewonnen. Das AC-Signal wird zweckmässigerweise in einem Bandpass 43 gefiltert und im (z.B. phasenempfindlichen) Gleichrichter 44 in ein der Amplitude des AC-Signals proportionales Gleichspannungssignal (AC-Amplitude 66) umgewandelt. Der Gleichrichter 44 wird mit der Frequenz des Treibers 55, der den Luftbewegungsgenerator 4 antreibt, gesteuert.

Die AC-Amplitude 66 pendelt nun zwischen den Werten für hohe und tiefe Gassensortemperatur hin und her. Die entsprechenden Werte werden duch die zwei "Sample-and-Hold"-Einheiten 45 und 46 erfasst, wobei die Einheit 45 den Wert 67 der AC-Amplitude für hohe und die Einheit 46 den Wert 68 der AC-Amplitude für tiefe Temperatur am Gassensor 11 misst. Die dazu notwendigen Impulse zum Starten der "Sample-and-Hold"-Einheiten werden von der Heizspannungsquelle 95 geliefert, die ihrerseits synchronisiert ist mit dem Treiber 55. Wert 67 und Wert 68 werden im Dividierverstärker 48 miteinander verglichen und das Resultat dieser Division wird im Komparator 49 mit einem Sollwert aus der Referenzspannungsquelle 51 verglichen. Entspricht das Verhältnis von Wert 67 zu Wert 68 demjenigen des gefährlichen Gases, so erzeugt der Komparator 49 eine Spannung 69, die einem logischen Eins entspricht, andernfalls entspricht die Spannung 69 einem logischen Null. Ueberschreitet der Wert 67 einen Sollwert, der aus der Spannungsquelle 50 geliefert wird, so erzeugt der Komparator 47 ein Signal 70 mit dem logischen Wert 1, das im Multiplikator 52 mit dem logischen Signal 69 multipliziert wird. Falls beide Signale 69 und 70 einem logischen 1 entsprechen, wird die Alarmschaltung 53 aktiviert.

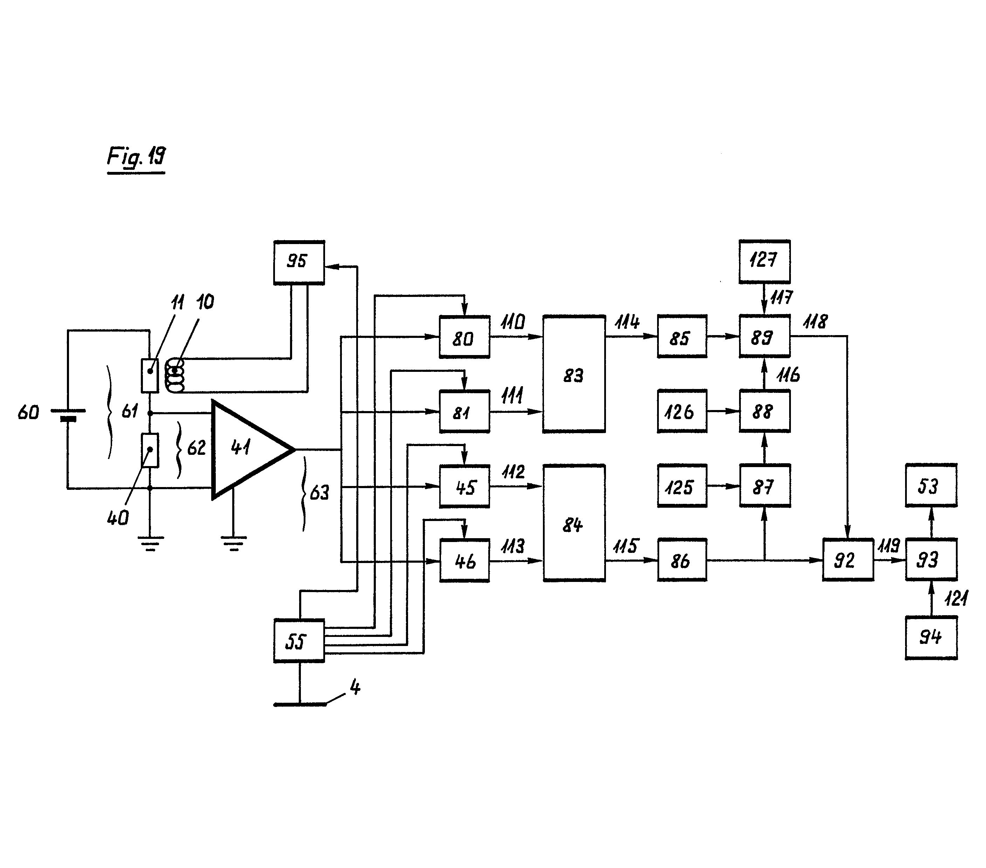

Fig. 19 zeigt eine elektronische Schaltung, die auf das in den Fig. 4 und 5 gezeigte erfindungsgemässe Verfahren angewendet wird. Das vom Verstärker 41 aufbereitete Spannungssignal 63 aus dem Gassensorschaltkreis, der aus dem Gassensor 11, dem Lastwiderstand 40, der Spannungsquelle 60 mit der Spannung 61 besteht und die Spannung 62 erzeugt, wird einerseits auf zwei "Sample-and-Hold"-Einheiten 45 und 46 gegeben, wobei der Zeitpunkt der Messung vom Treiber 55, der den Luftbewegungsgenerator 4 antreibt und mit der Heizspannungsquelle 95 synchron läuft, so bestimmt wird, dass die "Sample-and-Hold"-Einheit 45 den Wert $B_1$ und die "Sample-and-Hold"-Einheit 46 den Wert $B_2$ misst und die Einheiten 45 und 46 diesen Werten proportionale Spannungen 112 bzw. 113 abgeben. Andererseits wird das Spannungssignal 63 auf zwei Maximalwertspeicher 80 und 81 gegeben, die den Maximalwert des Signals 63 während einer vom Treiber 55 bestimmten Zeitspanne messen und eine dem Maximalwert $A_1$ bzw. $A_2$ in Fig. 4a proportionale Spannung 110 bzw. 111 abgeben. Wird anstelle eines Halbleiter-Gassensors als Gassensor 11 ein Pellistor benützt, so werden die Maximalwertspeicher 80 und 81 durch "Sample-and-Hold"-Einheiten, analog zu den "Sample and Hold"-Einheiten 45 und 46 ersetzt. Die Spannungen 110 und 111 werden im Differenzverstärker 83 zur Spannung 114 umgesetzt, die proportional zur Differenz $(A_2-A_1)$ ist und im Integrator 85 geglättet wird. Die Spannungen 112 und 113 werden im Differenzverstärker 84 zur Spannung 115 umgesetzt, die der Differenz $(B_1-B_2)$ entspricht und die im Integrator 86 geglättet wird.

Die geglättete Spannung 115 erzeugt im Multiplikator 87 und Additionsverstärker 88 zusammen mit den Spannungen 125 und 126, die den Werten a bzw. b in Gleichung (3) entsprechen, einen fiktiven $(A_2-A_1)$-Wert 116. Der Multiplikator 87, inklusive Additionsverstärker 88, die nach Gleichung (3) arbeiten

$$\text{fiktiver } (A_2-A_1)\text{-Wert} = a \cdot (B_1-B_2) + b \qquad (3)$$

benützen die beiden Konstanten a und b, die eine Gerade beschreiben, die der in Fig. 7 gestrichelten, leicht gebogenen Linie für CO durch Regressionsrechnung optimal angepasst worden ist, wobei a die Steigung der Geraden und b deren Achsenabschnitt auf der Ordinate bedeuten. Diese Gerade liegt angenähert in der Mitte der Messwerte für CO für sehr feuchte und sehr trockene Atmosphäre. Der vom Multiplikator 87 inklusive Additionsverstärker 88 berechnete fiktive $(A_2-A_1)$ Wert 116 liegt nun angenähert auf dieser in Fig. 7 eingezeichneten gestrichelten Linie. Im Differenzverstärker 89 wird jetzt der fiktive $(A_2-A_1)$-Wert 116 vom gemessenen und geglätteten $(A_2-A_1)$-Wert 114 subtrahiert. Stimmen fiktiver und wahrer $(A_2-A_1)$-Wert innerhalb der in Fig. 7 gezeigten, durch wechselnde relative Feuchten bedingten Grenzen für CO überein, so ist klar die Anwesenheit von nur CO als reduzierendes Gas im zu untersuchenden Gasgemisch bewiesen.

Der Differenzverstärker 89 bildet den negativen Absolutwert von (Spannung 116 - Spannung 114) und gibt unter zusätzlicher Addition der Spannung 117, die in Fig. 7 dem zur Ordinate parallelen Abstand k zwischen den Bändern für CO und $CO_4$ entspricht und laut Fig. 19 durch die Spannungsquelle 127 erzeugt wird, eine Spannung 118 ab, die dem Wert k- $|$(wahrer $(A_2-A_1)$-Wert - fiktiver $(A_2-A_1)$-Wert$|$ entspricht. Im Multiplikator 92 wird die geglättete Spannung 115 mit der Spannung 118 multipliziert. Stimmen fiktiver und wahrer $(A_2-A_1)$-Wert über-

ein, so erfolgt die Multiplikation im Multiplikator 92 mit dem Faktor k. Stimmen andererseits fiktiver 116 und wahrer 114 $(A_2-A_1)$- Wert innerhalb der in Fig. 7 gezeigten Grenzen für CO nicht überein, so stammt die am Gassensor beobachtete Aenderung der elektrischen Leitfähgikeit $\sigma$ offensichtlich nicht nur vom gefährlichen CO, sondern auch noch vom $CH_4$. Der Differenzverstärker 89 erzeugt deshalb eine Spannung 118, die im Multiplikator 92 die geglättete Spannung 115 mit einem Wert zwischen 0 und k multipliziert. Die nach dem Multiplikator 92 vorliegende Spannung 119 entspricht nun einem Wert $(B_1-B_2)$, der nur noch von CO herrührt.

Der Komparator 93 vergleicht diesen "Nur-CO-$(B_1-B_2)$-Wert" 119 mit einer Referenzspannung 121 des Sollwertgebers 94 und steuert eine Alarmschaltung 53 an, sobald der "Nur-CO-$(B_1-B_2)$-Wert" 119 einen vorgegebenen Schwellenwert überschreitet. Verlaufen die Bänder für die Gase CO und $CH_4$ in Fig. 7 nicht parallel, so wird die Konstante k abhängig vom Wert $(B_1-B_2)$ und muss durch einen in Fig. 19 nicht gezeigten weiteren Multiplikatorverstärker entsprechend dem Wert $(B_1-B_2)$ korrigiert werden, was zweckmässig durch Beeinflussung der Spannungsquelle 127 erfolgt.

Wird anstelle der Differenz $(A_2 - A_1)$ nur $A_2$ verwendet, so entfallen der Maximalwertspeicher 80 und der Differenzverstärker 83. Können die Bänder für CO und $CH_4$ in Fig. 7 nicht genügend genau durch Geraden approximiert werden, so werden die in Fig. 7 eingezeichneten gestrichelten Kurven durch ein allgemeines Polynom n-ten Grades dargestellt, was anstelle der zwei Spannungen 125 und 126 nun n + 1 Spannungen benötigt und entsprechend mehr Additions- und Multiplikationsverstärkers.

Die in Fig. 19 beschriebene Schaltung kann auch dazu verwendet werden, dass auch nur die Anwesenheit eines spezifischen reduzierenden Gases in Anwesenheit von anderen reduzierenden Gasen durch geeignete optische oder akustische Mittel angezeigt wird.

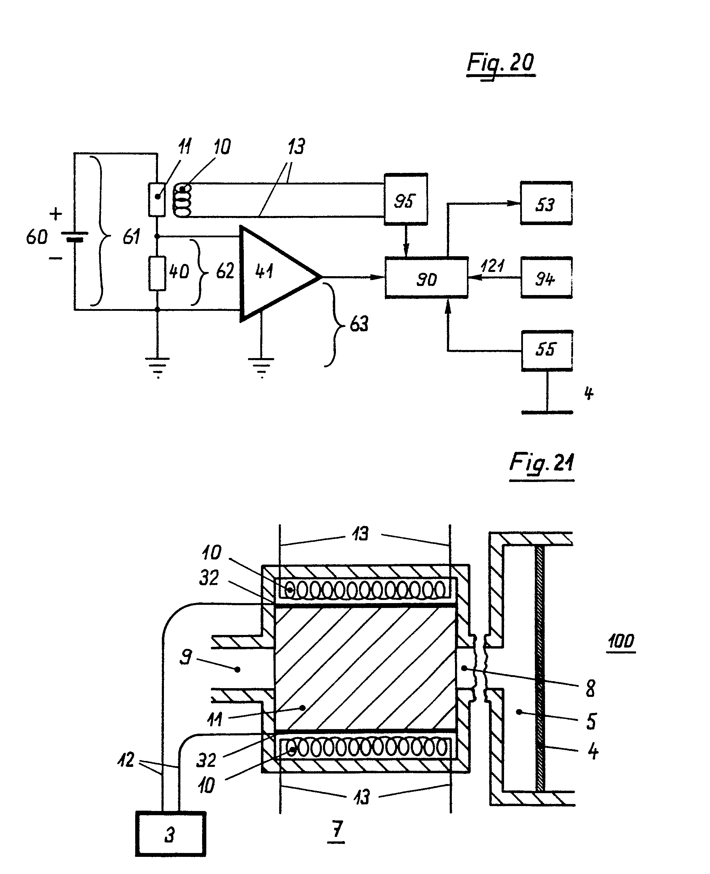

Selbstverständlich können die in Fig. 18 und 19 beschriebenen Funktionen nicht nur in herkömmlicher Weise durch Analogschaltungen bewirkt werden, sondern können mittels dem Fachmann bekannter Digitalschaltkreise unter Verwendung eines Mikroprozessors realisiert werden, siehe Fig. 20. Das vom Verstärker 41 aufbereitete Signal 63 wird in diesem Falle vom digitalen, einen Mikroprozessor enthaltenden Schaltkreis 90 in bekannter Weise digitalisiert, wobei die Abtastfrequenz zweckmässigerweise mindestens zweimal, besser aber zehnmal, insbesondere hundertmal, höher liegt als die Grösse der beiden Frequenzen des Luftbewegungsgenerators 4, bzw. dessen Treibers 55 einerseits und der Frequenz der Temperaturzyklen andererseits, die als Referenzfrequenzen dem digitalen Schaltkreis 90 zur Verfügung gestellt werden. Im Vergleich zur Referenzspannung 121 des Sollwertgebers 94 berechnet und entscheidet der digitale Schaltkreis 90, ob ein bestimmtes reduzierendens Gas in gefährlicher Konzentration vorliegt und steuert gegebenenfalls eine Alarmschaltung 53 an.

Die in Fig. 19 und 20 gezeigten Schaltungen können sinngemäss auch zur Bestimmung und Auswertung der Differenzen $(A_4-A_3)$ und $(B_4-B_3)$ aus Fig. 4a angewendet werden, wenn ein Pellistor als Gassensor 11 verwendet wird.

Fig. 21 stellt eine Weiterentwicklung des in Fig. 12 gezeigten Gasdetektors 100 dar, wobei zur besseren Erkennbarkeit der Details die Messkammer 7 in einem etwa dreissigmal grösseren Massstab gezeichnet ist als die Referenzkammer 5. Der Gassensor 11 mit den Massen $0,8 \times 0,8 \times 0,5 \text{ mm}^3$ besteht aus einem Stück hoch porösen Metalloxids, das auf zwei Seiten die Elektroden 32 trägt, von zwei Heizungen 10 auf eine vorbestimmte Temperatur gebracht wird und die Messkammer 7 völlig ausfüllt. Der Luftbewegungsgenerator 4, der eine Wand oder einen Teil der Wand der Referenzkammer 5 bildet, besteht aus einer Metallmembran von 30 mm Durchmesser, die von einem handelsüblichen Piezoschwinger angetrieben wird und dessen kleine Bewegungsamplituden ausreichen, um das zu untersuchende Gasgemisch durch die Oeffnung 9, durch den Gassensor 11 und die Oeffnung 8 in die Referenzkammer 5 zu saugen und anschliessend in umgekehrter Richtung aus der Referenzkammer 5 durch die Oeffnung 8 und durch den Gassensor 11 und die Oeffnung 9 wieder auszublasen. Da die Wände der Messkammer 7 und der Referenzkammer 5 aus einem gasdichten Material mit sehr kleiner Wärmeleitfähigkeit bestehen, benötigt dieser Gasdetektor 100 nur ca. 80 mW elektrische Leistung und kann auch noch kleinste Spuren von reduzierenden Gasen äusserst genau nachweisen, indem die elektrische Leitfähigkeit $\sigma$ des Gassensors 11 über die Elektroden 32 und die Zuleitungen 12 durch die Auswerteeinheit 3 gemessen wird und in eine Differenz $(B_1-B_2)$ und eine Differenz $(A_2-A_1)$ umgewandelt wird. Durch einen Vergleich der Differenz $(B_1-B_2)$ mit der Differenz $(A_2-A_1)$ kann die Auswerteeinheit 3 zusätzlich entscheiden, welches reduzierende Gas detektiert worden ist. Soll der Gasdetektor 100 die Konzentration eines spezifischen reduzierenden Gases nachweisen, so ist dies ebenfalls möglich, da die Auswerteeinheit 3, deren Blockschaltbilder in Fig. 18-20 gezeigt sind, die dazu benötigten Umrechnungen selbständig durchführt. Diese Konzentrationsbestimmung ist unabhängig davon, ob noch andere reduzierende Gase ausser dem speziell zu detektierenden Gas im zu untersuchenden Gasgemisch enthalten sind.

Das Verhältnis des Referenzkammervolumens zum Messkammervolumen beträgt 5:1, das Verhältnis der Summe der Volumina von Referenzkammer und Messkammer zur Summe der Volumina von Gassensor 11 und Heizung 10 beträgt ca. 6:1 für diesen experimentell erprobten Gasdetektor 100.

Figur 22 zeigt eine Weiterentwicklung des in Figur 17 dargestellten Gasdetektors 100. Der Gassensor 11 besteht dabei aus einem quaderförmigen Stück Metalloxid, wobei auf zwei gegenüberliegenden Seiten die Elektroden 32 aufgebracht sind. Bei dieser Ausgestaltung stellt das Material des Gassensors 11 die Messkammer 7 dar. Das poröse Metalloxid kann ein Material sein, wie es in der EP-A-120 203, EP-PA 84 109 653 oder EP-PA 84 107 849 beschrieben ist. Die Messkammer 7, d.h. der Metalloxidblock weist die Masse 2 x 2 x 1 mm auf, wobei in der dargestellten Ausgestaltung die Elektroden 32 Boden und Decke der Messkammer bilden während die Seitenwände des Metalloxidblocks die Oeffnung 9, d.h. die Verbindung mit der Aussenatmosphäre bilden. Dadurch wird ein ausserordentlich schneller Gasaustausch gewährleistet und der Strömungswiderstand des Gassensors 11 gering gehalten. Die Referenzkammer 5 ist unmittelbar auf eine der Elektroden 32 aufgesetzt, und die Verbindungsöffnung 8 befindet sich in dieser Elektrode 32. Der Luftbewegungsgenerator 4 am Ende der Referenzkammer 5 ist ein Minilautsprecher mit ca. 20 mm Durchmesser, und die Referenzkammer 5 ist ein Rohr aus einem Material mit geringer Wärmeleitfähigkeit.

Durch die Bewegungen des Luftbewegungsgenerators 4 wird das zu untersuchende Gasgemisch durch die Wände und das Material des Gassensors 11 (und damit durch die Messkammer 7) in die Referenzkammer 5 gesaugt und anschliessend in umgekehrter Richtung wieder ausgeblasen. Die Heizung 10 ist auf einer wärmeisolierenden Unterlage 38 befestigt; sie benötigt daher nur etwa 250 mW elektrische Heizleistung und kann auch noch kleinste Spuren von reduzierenden Gasen nachweisen. Die elektrische Auswertung der Signale erfolgt in der Auswerteschaltung wie für das vorstehende Beispiel beschrieben.

Diese Konstruktion bietet den Vorteil, dass das Volumen der Messkammer 7 durch das Volumen des Gassensors 11 exakt bestimmt ist. Dadurch wird eine hohe Reproduzierbarkeit der AC- und DC-Signale für verschiedene Gasdetektoren 100 erreicht.

- 50 -

0157237

PATENTANSPRUECHE

1. Verfahren zum Nachweis von reduzierenden Gasen in einem
   Gasgemisch, insbesondere in Luft, mittels eines Gasdetektors (100), der einen einen Metalloxid-Halbleiter aufweisenden Gassensor (11) enthält, dessen elektrische Leitfähigkeit ($\sigma$) direkt von der Konzentration an reduzierenden Gasen abhängt, dessen Temperatur in mindestens
   zweimaligem Zyklus nach einem vorgegebenen Muster kontinuierlich von einem Anfangswert bis zu einem oberen
   Schwellenwert erhöht und anschliessend nach dem gleichen
   oder einem anderen Muster wieder auf ein Anfangswert vermindert wird und dessen elektrisches Ausgangssignal ($\sigma$)
   in einer Auswerteschaltung (3) ausgewertet wird, dadurch
   gekennzeichnet, dass das zu untersuchende Gasgemisch wenigstens teilweise periodisch gegen ein Referenzgas mit
   keinem oder einem geringen Gehalt an reduzierenden Gasen
   ausgetauscht wird, wodurch sich die elektrische Leitfähigkeit ($\sigma$) des Gassensors (11) periodisch verändert und
   dass der zeitliche Verlauf dieser periodisch variierenden
   elektrischen Leitfähigkeit ($\sigma$) in der Auswerteschaltung
   (3) zum Nachweis und/oder zur Bestimmung der Konzentration
   und/oder der Art der im zu untersuchenden Gasgemisch vorhandenen reduzierenden Gase ausgewertet wird.

2. Verfahren gemäss Patentanspruch 1, dadurch gekennzeichnet, dass ein Gasdetektor (100) verwendet wird, der eine
   gegen die Aussenluft abgeschlossene, einen Luftbewegungsgenerator (4) aufweisende Referenzkammer (5) und eine
   mit der Referenzkammer (5) über mindestens eine Verbindungsöffnung (8) in Verbindung stehende, eine Einlassöffnung (9) zum Einlass des zu untersuchenden Gasgemisches
   aufweisende und einen bei Einwirkung von reduzierenden Gasen seinen elektrischen Widerstand ändernden, durch
eine Heizung (10) auf bestimmte Temperaturen erhitzbaren
Gassensor (11) aufweisende Messkammer (7) aufweist, dass
das zu untersuchende Gasgemisch periodisch während einer
Einsaugphase (28) durch Volumenvergrösserung der Referenzkammer (5) mittels des Luftbewegungsgenerators (4)
durch die Einlassöffnung (9) in die Messkammer (7) gesaugt wird, in welcher reduzierende Gase durch den Gassensor (11) mindestens teilweise entfernt werden und
ein reduzierende Gase in geringerer Konzentration enthaltendes, bzw. von reduzierenden Gasen befreites Referenzgas durch die Verbindungsöffnung (8) in die Referenzkammer (5) gesaugt wird, und dieses Referenzgas während
einer Ausblasphase (29) durch Volumenverminderung der
Referenzkammer (5) mittels des Luftbewegungsgenerators
(4) durch die Messkammer (7) hindurch ausgeblasen wird,
wodurch sich die elektrische Leitfähigkeit ($\sigma$) des Gassensors (11) periodisch verändert, und dass der zeitliche Verlauf dieser periodisch variierenden elektrischen
Leitfähigkeit ($\sigma$) in einer Auswerteschaltung (3) zum
Nachweis und/oder zur Bestimmung der Konzentration und/
oder der Art der im zu untersuchenden Gasgemisch vorhandenen reduzierenden Gase ausgewertet wird.

3.  Verfahren gemäss einem der Patentansprüche 1 und 2, dadurch gekennzeichnet, dass die elektrische Leitfähigkeit
($\sigma$) des Gassensors (11), die sich aus einem zeitlich
langsam in Abhängigkeit vom Temperaturzyklus variierenden Anteil und einem entsprechend der Gasaustauschperiode (27) modulierten, sein Vorzeichen ändernden Anteil
zusammensetzt, in einer Auswerteschaltung (3) in einen
zeitlich langsam variierenden Gleichspannungsanteil (DC-
Signal) und einen Wechselspannungsanteil (AC-Signal)
umgesetzt und aufgeteilt wird und dass mindestens die Amplitude (AC-Amplitude) des Wechselspannungsanteils
(AC-Signal) zum Nachweis von reduzierenden Gasen ausgewertet wird.

4. Verfahren gemäss einem der Patentansprüche 1 bis 3, dadurch gekennzeichnet, dass die Länge der aus einer Einsaugphase (28) und einer Ausblasphase (29) bestehenden
Gasaustauschperiode (27) so gewählt wird, dass sie mit
der doppelten Länge des Temperaturzyklus übereinstimmt,
wobei die Temperatur des Gassensors (11) während eines
Hochtemperaturzeitabschnitts im ersten Teil der Einsaugphase (28) auf einer Temperatur, die mindestens 50° über
der Temperatur des Gassensors (11) während eines anschliessenden Niedertemperaturzeitabschnitts liegt, vorzugsweise auf etwa 350°C, gehalten wird und während
eines anschliessenden Niedertemperaturzeitabschnitts
im zweiten Teil der Einsaugphase (28) auf einer niedrigen Temperatur von 30°C bis 300°C, vorzugsweise etwa
50°C, gehalten wird und dass die Temperatur des Gassensors (11) während eines Hochtemperaturzeitabschnitts
im ersten Teil der Ausblasphase (29) auf einer Temperatur, die mindestens 50° über der Temperatur des Gassensors (11) während des anschliessenden Niedertemperaturzeitabschnitts liegt, vorzugsweise auf etwa 350°C, gehalten wird und während eines anschliessenden Niedertemperaturzeitabschnitts im zweiten Teil der Ausblasphase
(29) auf einer niedrigen Temperatur von 30°C bis 300°C,
vorzugsweise 50°C, gehalten wird und dass der während
des Hochtemperaturzeitabschnitts in der Einsaugphase
(28) gemessene Höchstwert ($A_1$) der elektrischen Leitfähigkeit ($\sigma$), der während des Hochtemperaturzeitabschnitts in der Ausblasphase (29) gemessene Höchstwert
($A_2$) der elektrischen Leitfähigkeit ($\sigma$), der am Ende
des Niedertemperaturzeitabschnitts während der Einsaugphase (28) gemessene Wert ($B_1$) der elektrischen Leitfähigkeit ($\sigma$) und/oder der am Ende des Niedertemperaturzeitabschnitts während der Ausblasphase (29) gemessene
Wert ($B_2$) der elektrischen Leitfähigkeit ($\sigma$) des Gassensors (11) in der Auswerteschaltung (3) zum Nachweis
und/oder zur Bestimmung der Konzentration und/oder der
Art des reduzierenden Gases ausgewertet wird.

5. Verfahren gemäss einem der Patentansprüche 1 bis 3, dadurch gekennzeichnet, dass die Länge der aus einer Einsaugphase (28) und einer Ausblasphase (29) bestehenden
Gesamtaustauschperiode (27) so gewählt wird, dass sie
mit der doppelten Länge des Temperaturzyklus übereinstimmt, wobei die Temperatur des Gassensors (11) während
eines Niedertemperaturzeitabschnitts im ersten Teil der
Einsaugphase (28) auf einer niedrigen Temperatur von
30°C bis 300°C, vorzugsweise etwa 50°C, gehalten wird
und die Temperatur des Gassensors (11) während eines
anschliessenden Hochtemperaturzeitabschnitts im zweiten
Teil der Einsaugphase (28) auf einer hohen Temperatur,
die mindestens 50°C über der Temperatur des Gassensors
(11) während des vorangegangenen Niedertemperaturzeitabschnitts liegt, vorzugsweise auf etwa 350°C, gehalten
wird und dass die Temperatur des Gassensors (11) während
eines Niedertemperaturzeitabschnitts im ersten Teil der
Ausblasphase (29) auf einer niedrigen Temperatur von
30°C bis 300°C, vorzugsweise etwa 50°C, gehalten wird
und die Temperatur des Gassensors (11) während eines
anschliessenden Hochtemperaturzeitabschnitts im zweiten
Teil der Ausblasphase (29) auf einer hohen Temperatur,
die mindestens 50° über der Temperatur des Gassensors
(11) während des vorangegangenen Niedertemperaturzeitabschnitts liegt, vorzugsweise auf etwa 350°C, gehalten
wird und dass der während des Hochtemperaturzeitabschnitts in der Einsaugphase (28) gemessene Höchstwert ($A_1$) der elektrischen Leitfähigkeit ($\sigma$), der während des Hochtemperaturzeitabschnitts in der Ausblasphase (29) gemessene Höchstwert ($A_2$) der elektrischen Leitfähigkeit ($\sigma$), der am Ende des Niedertemperaturzeitabschnitts während der Einsaugphase (28) gemessene Wert ($B_1$) der elektrischen Leitfähigkeit ($\sigma$) und/oder der am Ende des Niedertemperaturzeitabschnitts während der Ausblasphase (29) gemessene Wert ($B_2$) der elektrischen Leitfähigkeit ($\sigma$) des Gassensors (11) in der Auswerteschaltung (3) zum Nachweis und/oder zur Bestimmung der Konzentration und/oder der Art des reduzierenden Gases ausgewertet wird.

6. Verfahren gemäss einem der Patentansprüche 1 bis 3, dadurch gekennzeichnet, dass die Länge der aus einer Einsaugphase (28) und einer Ausblasphase (29) bestehenden Gasaustauschperiode (27) so gewählt wird, dass sie nicht mit der doppelten Länge des Temperaturzyklus übereinstimmt, wobei die Länge der Gasaustauschperiode (27) vorzugweise kürzer ist als die doppelte Länge des Temperaturzyklus.

7. Verfahren gemäss einem der Patentansprüche 4 bis 6, dadurch gekennzeichnet, dass die Differenz ($B_1$-$B_2$) des am Ende des Niedertemperaturzeitabschnitts während der Einsaugphase (28) gemessenen Werts ($B_1$) der elektrischen Leitfähigkeit ($\sigma$) und des am Ende des Niedertemperaturzeitabschnitts während der Ausblasphase (29) gemessenen Werts ($B_2$) der elektrischen Leitfähigkeit ($\sigma$) des Gassensors (11) in der Auswerteschaltung (3) zum Nachweis und/oder zur Bestimmung der Konzentration der reduzierenden Gase ausgewertet wird.

8. Verfahren gemäss einem der Patentansprüche 4 bis 6, dadurch gekennzeichnet, dass die Differenz $(A_2-A_1)$ des während des Hochtemperaturzeitabschnitts in der Ausblasphase (29) gemessenen Höchstwerts $(A_2)$ der elektrischen Leitfähigkeit $(\sigma)$ und des während des Hochtemperaturzeitabschnitts in der Einsaugphase (28) gemessenen Höchstwerts $(A_1)$ der elektrischen Leitfähigkeit $(\sigma)$ des Gassensors (11) in der Auswerteschaltung (3) zum Nachweis und/oder zur Bestimmung der Konzentration der reduzierenden Gase ausgewertet wird.

9. Verfahren gemäss einem der Patentansprüche 4 bis 8, dadurch gekennzeichnet, dass die Differenz $(B_1-B_2)$ des am Ende des Niedertemperaturzeitabschnitts während der Einsaugphase (28) gemessenen Werts $(B_1)$ der elektrischen Leitfähigkeit $(\sigma)$ und des am Ende des Niedertemperaturzeitabschnitts während der Ausblasphase (29) gemessenen Werts $(B_2)$ der elektrischen Leitfähigkeit $(\sigma)$ des Gassensors (11) in der Auswerteschaltung (3) zum Nachweis und/oder zur Bestimmung der Konzentration der reduzierenden Gase ausgewertet wird und dass die Differenz $(A_2-A_1)$ des während des Hochtemperaturzeitabschnitts in der Ausblasphase (29) gemessenen Höchstwerts $(A_2)$ der elektrischen Leitfähigkeit $(\sigma)$ und des während des Hochtemperaturzeitabschnitts in der Einsaugphase (28) gemessenen Höchstwerts $(A_1)$ der elektrischen Leitfähigkeit $(\sigma)$ des Gassensors (11) oder des während des Hochtemperaturzeitabschnitts in der Ausblasphase (29) gemessenen Höchstwerts $(A_2)$ oder des während des Hochtemperaturzeitabschnitts in der Einsaugphase (28) gemessenen Höchstwerts $(A_1)$ der elektrischen Leitfähigkeit $(\sigma)$ des Gassensors (11) im Vergleich zu der Differenz $B_1$ minus $B_2$ zur Bestimmung der Art des reduzierenden Gases ausgewertet wird.

10. Verfahren gemäss einem der Patentansprüche 4 bis 8 dadurch gekennzeichnet, dass die Differenz $(A_1-A_2)$ des während des Hochtemperaturzeitabschnitts in der Einsaugphase (28) gemessenen Höchstwerts $(A_1)$ der elektrischen Leitfähigkeit $(\sigma)$ und des während des Hochtemperaturzeitabschnitts in der Ausblasphase (29) gemessenen Höchstwerts $(A_2)$ der elektrischen Leitfähigkeit $(\sigma)$ des Gassensors (11) oder eines dieser Höchstwerte $(A_1, A_2)$ allein zum Nachweis und/oder zur Bestimmung der Konzentration der reduzierenden Gase ausgewertet wird und dass aus der Differenz $(B_1-B_2)$ des am Ende des Niedertemperaturzeitabschnitts während der Einsaugphase (28) gemessenen Werts $(B_1)$ der elektrischen Leitfähigkeit $(\sigma)$ und des am Ende des Niedertemperaturzeitabschnitts während der Ausblasphase (29) gemessenen Werts $(B_2)$ der elektrischen Leitfähigkeit $(\sigma)$ des Gassensors (11) im Vergleich zur Differenz $(A_1-A_2)$ der Höchstwerte $(A_1, A_2)$ oder zu den Höchstwerten $(A_1, A_2)$ allein zur Bestimmung der Art des reduzierenden Gases ausgewertet wird.

11. Verfahren gemäss einem der Patentansprüche 4 bis 6, dadurch gekennzeichnet, dass der am Ende des Niedertemperaturzeitabschnitts während der Einsaugphase (28) gemessene Wert $(B_1)$ der elektrischen Leitfähigkeit $(\sigma)$ des Gassensors (11) zum Nachweis und/oder zur Bestimmung der Konzentration der reduzierenden Gase ausgewertet wird.

12. Verfahren gemäss einem der Patentansprüche 4 bis 6, dadurch gekennzeichnet, dass der während des Hochtemperaturzeitabschnitts in der Einsaugphase (28) gemessene Höchstwert $(A_1)$ der elektrischen Leitfähigkeit $(\sigma)$ oder der während des Hochtemperaturzeitabschnitts in der Ausblasphase (29) gemessene Höchstwert $(A_2)$ der elektrischen Leitfähigkeit $(\sigma)$ des Gassensors (11) zum Nachweis und/oder zur Bestimmung der Konzentration der reduzierenden Gase ausgewertet wird.

13. Verfahren gemäss einem der Patentansprüche 4 und 11,
    dadurch gekennzeichnet, dass der am Ende des Niedertemperaturzeitabschnitts während der Einsaugphase (28) ge-
    messene Wert (B$_1$) der elektrischen Leitfähigkeit ($\sigma$)
    des Gassensors (11) zum Nachweis und/oder zur Bestimmung
    der Konzentration der reduzierenden Gase ausgewertet
    wird und dass der während des Hochtemperaturzeitabschnitts in der Einsaugphase (28) gemessene Höchstwert
    (A$_1$) der elektrischen Leitfähigkeit ($\sigma$) oder der während
    des Hochtemperaturzeitabschnitts in der Ausblasphase
    (29) gemessene Höchstwert (A$_2$) der elektrischen Leit-
    fähigkeit des Gassensors (11) im Vergleich zu dem am
    Ende des Niedertemperaturzeitabschnitts während der Ein-
    saugphase (28) gemessenen Wert (B$_1$) der elektrischen
    Leitfähigkeit ($\sigma$) zur Bestimmung der Art des reduzierenden Gases ausgewertet wird.

14. Verfahren gemäss einem der Patentansprüche 5 und 12,
    dadurch gekennzeichnet, dass der während des Hochtemperaturzeitabschnitts in der Einsaugphase (28) gemessene
    Höchstwert (A$_1$) der elektrischen Leitfähigkeit ($\sigma$) oder
    der während des Hochtemperaturzeitabschnitts in der Ausblasphase (29) gemessene Höchstwert (A$_2$) der elektri-
    schen Leitfähigkeit des Gassensors (11) zum Nachweis
    und/oder zur Bestimmung der Konzentration der reduzierenden Gase ausgewertet wird und dass der am Ende des
    Niedertemperaturzeitabschnitts während der Einsaugphase
    (28) gemessene Wert (B$_1$) der elektrischen Leitfähigkeit
    ($\sigma$) im Vergleich zu den während der Hochtemperaturzeit-
    abschnitte gemessenen Höchstwerten (A$_1$, A$_2$) zur Bestim-
    mung der Art des reduzierenden Gases ausgewertet wird.

15. Verfahren gemäss einem der Patentansprüche 1 bis 3, dadurch gekennzeichnet, dass ein Gasdetektor (100) verwendet wird, der einen nach dem Prinzip der katalytischen Verbrennung arbeitenden Pellistor als Gassensor (11) aufweist und dass die Länge der aus einer Einsaugphase (28) und aus einer Ausblasphase (29) bestehenden Gasaustauschperiode (27) so gewählt wird, dass sie mit der doppelten Länge des Temperaturzyklus übereinstimmt, wobei die Temperatur des Gassensors (11) während eines Hochtemperaturzeitabschnitts im ersten Teil der Einsaugphase (28) auf einer Temperatur, die mindestens 50°C über der Temperatur des Gassensors (11) während eines anschliessenden Niedertemperaturzeitabschnitts liegt, vorzugsweise auf etwa 450°C, gehalten wird und während eines anschliessenden Niedertemperaturzeitabschnitts im zweiten Teil der Einsaugphase (28) auf einer niedrigen Temperatur von 100°C bis 650°C, vorzugsweise etwa 300°C, gehalten wird und dass die Temperatur des Gassensors (11) während eines Hochtemperaturzeitabschnitts im ersten Teil der Ausblasphase (29) auf einer Temperatur, die mindestens 50°C über der Temperatur des Gassensors (11) während des anschliessenden Niedertemperaturzeitabschnitts liegt, vorzugsweise auf etwa 450°C, gehalten wird und während eines anschliessenden Niedertemperaturzeitabschnitts im zweiten Teil der Ausblasphase (29) auf einer niedrigen Temperatur von 100°C bis 650°C, vorzugsweise etwa 300°C, gehalten wird und dass der am Ende des Hochtemperaturzeitabschnitts in der Einsaugphase (28) gemessene Wert ($A_3$) der elektrischen Leitfähigkeit ($\sigma$), der am Ende des Hochtemperaturzeitabschnitts in der Ausblasphase (29) gemessene Wert ($A_4$) der elektrischen Leitfähigkeit ($\sigma$), der am Ende des Niedertemperaturzeitabschnitts während der Einsaugphase (28) gemessene Wert ($B_3$) der elektrischen Leitfähigkeit ($\sigma$) und der

am Ende des Niedertemperaturzeitabschnitts während der Ausblasphase (29) gemessene Wert ($B_4$) der elektrischen Leitfähigkeit ($\sigma$) des Gassensors (11) in der Auswerteschaltung (3) in der Weise ausgewertet wird, dass die Differenz ($A_4$-$A_3$) zum Nachweis und/oder zur Bestimmung der Gesamtkonzentration an reduzierenden Gasen und die Differenz ($B_4$-$B_3$) zum Nachweis und/oder zur Bestimmung der Konzentration an leicht oxidierbaren reduzierenden Gasen und das Verhältnis von ($A_4$-$A_3$) : ($B_4$-$B_3$) im Vergleich zur Differenz ($B_4$-$B_3$) zur Bestimmung der Art der reduzierenden Gase im zu untersuchenden Gasgemisch ausgewertet wird.

16. Verfahren gemäss einem der Patentansprüche 1 bis 15, dadurch gekennzeichnet, dass in der Auswerteschaltung (3) die Konzentration mindestens eines bestimmten reduzierenden Gases ermittelt und ein Alarmsignal ausgelöst wird, wenn diese Konzentration einen vorbestimmten Wert überschreitet.

17. Verfahren gemäss einem der Patentansprüche 1 bis 16, dadurch gekennzeichnet, dass die Empfindlichkeit des Verfahrens gegenüber reduzierenden Gasen dadurch verändert wird, dass die Länge der Gasaustauschperiode (27) und des Tempeaturzyklus simultan kontinuierlich oder in diskreten Werten verändert wird.

18. Vorrichtung zur Durchführung des Verfahrens gemäss einem der Patentansprüche 1 bis 17, gekennzeichnet durch einen in einer Messkammer (7) angeordneten oder diese bildenden Gasdetektor (100), der einen einen Metalloxid-Halbleiter enthaltenden Gassensor (11), dessen elektrische Leitfähigkeit ($\sigma$) direkt von der Konzentration an reduzierenden Gasen abhängt und der durch eine Heizung (10) auf vorbestimmte Temperaturen aufheizbar ist, aufweist, durch eine gegen die Aussenluft abgeschlossene, einen Luftbewegungsgenerator (4) aufweisende Referenzkammer (5), die mit der Messkammer (7) in Verbindung steht und durch eine Auswerteschaltung (3) zur Auswertung der von dem Gassensor (11) abgegebenen elektrischen Signale.

19. Vorrichtung gemäss Patentanspruch 18, dadurch gekennzeichnet, dass der Gasdetektor (100) als Luftbewegungsgenerator (4) eine elektromagnetisch, elektrostatisch, piezoelektrisch oder thermomechanisch erregbare Membran in der Art eines Lautsprechers, eine Piezofolie aus PVDF, ein bimorphes piezoelektrisches oder bimetallisches Element oder eine durch Mikrolithographie erzeugte dünne Siliziumfolie aufweist.

20. Vorrichtung gemäss einesm der Patentansprüche 18 und 19, dadurch gekennzeichnet, dass der Gasdetektor (100) als Luftbewegungsgenerator (4) einen beweglichen Kolben enthält, der das zu untersuchende Gasgemisch während der Einsaugphase (28) durch den mit einer Heizung (10) beheizten Gassensor (11) hindurch und teilweise über diesen hinweg in der Weise saugt und dann zurückdrückt, dass praktisch das gesamte in der Messkammer (7) befind-

0157237

liche zu untersuchende Gasgemisch mit der Oberfläche des Gassensors (11) in Berührung kommt, wodurch eine möglichst vollständige Umsetzung der reduzierenden Gase an der Oberfläche des Gassensors (11) erfolgt und während der Ausblasphase (29) der Messkammer (7) durch Zurückdrücken des Kolbens ein praktisch von reduzierenden Gasen freies zu untersuchendes Gasgemisch den Gassensor (11) passiert und der bei jedem Kolbenhub einen Mikroschalter (15) in der Weise betätigt, dass abwechselnd unterschiedliche Heizspannungen aus zwei Energiequellen (30, 31) auf die Heizung (10) gegeben werden.

21. Vorrichtung gemäss einem der Patentansprüche 18 bis 20 dadurch gekennzeichnet, dass das Volumen der Teile, die das zu untersuchende Gasgemisch passiert, möglichst gering gehalten wird, so dass das Totvolumen auf ein Minimum reduziert wird.

22. Vorrichtung gemäss einem der Patentansprüche 18 bis 21, dadurch gekennzeichnet, dass die Volumina von Messkammer (7) und Referenzkammer (5) so aufeinander abgestimmt sind, dass bei jeder Einsaugphase (28) frisches zu untersuchendes Gasgemisch durch die Einlassöffnung (9) in die Messkammer (7) eingesaugt wird und bei jeder Ausblasphase (29) mindestens ein Teil des zu untersuchenden Gasgemisches durch die Einlassöffnung (9) die Messkammer (7) verlässt.

23. Vorrichtung gemäss einem der Patentansprüche 18 bis 22, dadurch gekennzeichnet, dass das Verhältnis des Volumens der Messkammer (7) zum Volumen der Referenzkammer (5) des Gasdetektors (100) mehr als 1 : 100, vorzugsweise mehr als 1 : 1000, beträgt.

24. Vorrichtung gemäss einem der Patentansprüche 18 bis 22, dadurch gekennzeichnet, dass das Verhältnis des Volumens der Referenzkammer (5) zum Volumen der Messkammer (7) mehr als 5 : 1 und das Verhältnis der Summe der Volumina von Referenzkammer (5) und Messkammer (7) zur Summe der Volumina von Gassensor (11) und Heizung (10) ca. 6 : 1 beträgt.

25. Vorrichtung gemäss Patentanspruch 18, dadurch gekennzeichnet, dass die Messkammer (7) aus einem zusammen mit der Heizung (10) auf einer wärmeisolierenden Unterlage angebrachten Block aus einem Halbleitermaterial, vorzugsweise einem Metalloxid-Halbleitermaterial besteht, auf dem Elektroden zur Messung des elektrischen Widerstandes direkt aufgebracht sind und an dessen einer Seite die Referenzkammer (5) angebracht ist.

26. Vorrichtung gemäss einem der Patentansprüche 18 bis 22 und 24, dadurch gekennzeichnet, dass Messkammer (7), Verbindungsöffnung (8) und Referenzkammer (5) des Gasdetektors (100) annähernd gleichen Querschnitt aufweisen.

27. Vorrichtung gemäss einem der Patentansprüche 18, 19 und 21 bis 26, dadurch gekennzeichnet, dass der Luftbewegungsgenerator (4) des Gasdetektors (100) eine schwingende Membran aufweist, und die Referenzkammer (5) so ausgebildet ist, dass sich die schwingende Membran des Luftbewegungsgenerators (4) während der Ausblasphase (29) dicht an eine vorzugsweise konusförmige Auflage (24) anlegt.

28. Vorrichtung gemäss einem der Patentansprüche 18, 19 und 21 bis 27, dadurch gekennzeichnet, dass sich vor der schwingenden Membran des Luftbewegungsgenerators (4) des Gasdetektors (100) eine Schutzmembran (26) befindet.

29. Vorrichtung gemäss einem der Patentansprüche 18 bis 28,
dadurch gekennzeichnet, dass der Gasdetektor (100) in
der Referenzkammer (5), vorzugsweise vor der Verbindungsöffnung (8), und/oder vor der Einlassöffnung (9) ein weiteres, durch Ausheizen in gewissen Zeitabständen regenerierbares Filter zur Adsorption von Gasen aufweist.

30. Vorrichtung gemäss einem der Patentansprüche 18 bis 29,
dadurch gekennzeichnet, dass der Gasdetektor (100) in
der Referenzkammer (5) einen weiteren Gassensor, vorzugsweise einen zur Bestimmung von Wasserdampf geeigneten
Referenzsensor, aufweist.

31. Vorrichtung gemäss einem der Patentansprüche 18 bis 24
und 26 bis 30, dadurch gekennzeichnet, dass die Einlassöffnung (9) des Gasdetektors (100) als Kapillare ausgebildet ist, deren Länge vorzugsweise mindestens 2 mm und
deren Innendurchmesser vorzugsweise höchstens 1 mm, insbesondere etwa 0,3 mm beträgt.

32. Vorrichtung gemäss einem der Patentansprüche 18 bis 24
und 26 bis 31, dadurch gekennzeichnet, dass die Wand des
Gasdetektors (100) aus gasdichtem, wärmeisolierendem Material besteht und dass das Material des Gassensors (11)
der Wand der Messkammer (7) eng anliegt.

**_Fig.1_**

**_Fig.22_**

Fig. 2

0157237

2 (19)

100

95

0157237

Fig. 3a

Fig. 3b

Peexiode des Temperaturzyklus

Fig. 3c

Bewegungsrichtung
des Luftbewegungs-
Generators nach links

Gasmischung
in Messkammer

zu untersuchende Gasmischung

nach rechts

Referenz
Gasmischung

Fig. 4a

Fig. 4b

Pellistor

Periode des
Temperaturzyklus

Fig. 4c

Einsaugen

Ausblasen

Fig. 5a

Fig. 5b

Periode des
Temperaturzyklus

Fig. 5c

Einsaugen                    Einsaugen

Ausblasen                  Ausblasen

Fig.6

Fig. 7

CH₄

CO

5%

93%

93%

5%

$\dfrac{A_2}{V}$

$\dfrac{B_1 - B_2}{V}$

Fig. 7

0157237

Fig. 8

$\dfrac{B_1}{V}$

$H_2$

$10^0$

$10^{-1}$

$10^{-2}$

$10^{-3}$

$10^{-4}$

93% ——— 4%

$1$    $10^1$    $10^2$    $10^3$    $10^4$

$\dfrac{Konzentration}{ppm}$

0157237

*Fig. 9*

Fig. 9 (Forts.)

11 (19)

0157237

*Fig. 10*

## Grundformen

Rechteck

Dreieck

symmetrisches Trapez

asymmetrisches Trapez

Sägezahn

Sinus

Rechteck durch Tiefpass

## Kombinationen

Dreieck und Rechteck durch Tiefpass

0157237

Symmetrie                    Fig. 10  (Forts.)

symmetrisch

asymmetrisch

0157237

Fig.11

0157237

_Fig. 12_

_Fig. 13_

Fig. 14

100

Fig. 15

100

_Fig. 16_

_100_

_Fig. 17_

*Fig. 18*

17 (19)

0157237

Fig. 19

*19 (19)*

*Fig. 20*

*Fig. 21*